(19) Europäisches Patentamt / European Patent Office / Office européen des brevets

(11) **EP 3 598 005 B1**

(12) **EUROPEAN PATENT SPECIFICATION**

(45) Date of publication and mention of the grant of the patent:
**24.11.2021 Bulletin 2021/47**

(51) Int Cl.:
**F24C 7/08** (2006.01)

(21) Application number: **19159194.0**

(22) Date of filing: **03.06.2015**

(54) **FOOD HEAT TREATMENT MONITORING SYSTEM**

LEBENSMITTELWÄRMEBEHANDLUNGSÜBERWACHUNGSSYSTEM

SYSTÈME DE SURVEILLANCE DE TRAITEMENT THERMIQUE DES ALIMENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.06.2014 EP 14001951**
**18.08.2014 EP 14002866**

(43) Date of publication of application:
**22.01.2020 Bulletin 2020/04**

(62) Document number(s) of the earlier application(s) in accordance with Art. 76 EPC:
**15725501.9 / 3 152 497**

(73) Proprietor: **Stork genannt Wersborg, Ingo**
**80799 München (DE)**

(72) Inventor: **Stork genannt Wersborg, Ingo**
**80799 München (DE)**

(74) Representative: **Müller Hoffmann & Partner**
**Patentanwälte mbB**
**St.-Martin-Strasse 58**
**81541 München (DE)**

(56) References cited:
**EP-A1- 2 662 628      EP-A2- 2 444 735**
**DE-A1-102012 204 229**

**Description**

The present invention is related to a food heat treatment monitoring system, in particular a monitoring system for heating, baking or proofing of food to be heated like bread, dough or the like.

Treating food with heat is done by mankind probably since the invention of fire. However, up until now this task is still controlled by a human operator. The goal of the underlying invention is to automate the food treatment and in particular bread baking or proofing such that no human interaction is necessary.

When processing food as e.g. in a manufacturing plant for raw or prebaked dough, the objects being processed underlie many process variations. Due to the nature of many food products, the objects being processed may vary in shape, colour, size and many other parameters. This is one of the key challenges in industrial food processing, because often processing devices have to be adjusted to compensate these variations. Hence, it is desirable to automate the industrial processing steps, making manual adjustments ideally unnecessary. In baking, for instance changes in flour characteristics may result in severe process variations of industrial dough processing devices. For instance it may be necessary to adapt parameters of a mixer, a dough divider, dough forming devices, proofing, cutter, packaging, the baking program of an oven or a vacuum baking unit.

In order to achieve the goal of automated baking or food processing it is necessary to provide the corresponding monitoring system with data from suitable monitoring devices. Hence, there is a need for monitoring systems with monitoring devices for collecting suitable data.

EP 2 662 628 A1 is related to an appliance for processing food and a method of operating the same. Herein, a food processing program is executed, which is assigned to an extracted set of characteristic features and food category. Executing the food processing program may be conducted automatically. This is done by capturing an image of a food item placed or to be placed into a chamber, extracting a set of characteristic features of the food item from the captured image, assigning a food category to the food item based on the characteristic features and a user input, and generating and storing an additional new data set, comprising the extracted set of features linked to the assigned food category in a feature data base, if at least one of the following situations applies. In a first situation, the extracted set of characteristic features is not contained in the database. In the second situation, the extracted set of characteristic features differs from a data set stored in a database by a predefined amount. According to a third situation, the assigned food category differs from a predefined or stored food category linked to the extracted set of characteristic features or a similar data set.

EP 2 444 735 A2 is concerned with a cooker and control method thereof. Herein, a control part reads an RGB color value of the food from the food image scanned by the image sensor to determine a cook degree of the food according to a variation depending on elapsed time in the read RGB color value of the food. Here, the control part compares the variation of the read RGB color value of the food to a variation of a reference RGB color value to control an output of the heat source. For example, the control part controls the heat source to increase the output of the heat source when the variation of the read RGB color value is less than that of the reference RGB color value. Also, the control part controls the heat source to increase the output of the heat source when the variation of the read RGB color value is greater than that of the reference RGB color value. The control part determines that the cooking of the food is finished when the read RGB color value of the food reaches a preset finish RGB color value.

It is an object of the present invention to provide a food heat treatment monitoring method which has flexibility for individually different food processing tasks by adapting to different types of food or process tasks.

This object is solved by the subject-matter of the independent claims. Advantageous embodiments and refinements of the present invention are described in the respective sub-claims. The invention is defined by the appended claims. References to embodiments which do not fall under the scope of the claims are to be understood as examples useful for understanding the invention.

According to an example, a heat treatment monitoring system is provided, which comprises a heat treatment machine. The heat treatment machine comprises a heat treatment chamber. The heat treatment machine further comprises at least one lighting source mounting for mounting a light source for illuminating the inside of the heat treatment chamber. The heat treatment monitoring system further comprises a monitoring apparatus, which comprises a camera, a camera light source and a mounting part, wherein the mounting part is adapted to be removably fixed to the lighting source mounting. The mounting part is preferably removably fixed to the lighting source mounting by a screw coupling. The camera light source preferably comprises at least one light emitting diode (LEDs) encircling the camera. The camera light source preferably comprises at least two light emitting diode (LEDs) encircling the camera. The camera light source preferably comprises a plurality of light emitting diode (LEDs) encircling the camera. The camera light source preferably comprises at least one light emitting diode (LEDs) surrounding the camera. The camera light source preferably comprises at least two light emitting diode (LEDs) surrounding the camera. The camera light source preferably comprises a plurality of light emitting diode (LEDs) surrounding the camera. The monitoring apparatus preferably further comprises a cooling device. The cooling device preferably comprises a fan. The cooling device also preferably comprises at least one of a fan, a peltier element, a water cooling device, a heat sink or a cooling plate. Further, according to an embodiment of the present invention, a method for integrating a monitoring apparatus in heat treatment machine is provided, comprising the steps of: removing a light source for illuminating the inside of a heat treatment chamber of the heat treatment machine from a lighting source mounting, coupling a monitoring apparatus with the lighting source mounting, and connecting a power adaptor of the monitoring apparatus with a power source adaptor of the lighting source mounting, which is adapted to provide the light source with electric power.

For goods baked in an oven a monitoring system with a camera may be used to monitor the baking process through a window in an oven. However, in order to prevent thermal losses by heat dissipation through the window, in conventional ovens such looking windows are made of double glass, i.e. they have an inner and an outer glass pane. Hence, light from outside the oven may pass the outer glass pane and be reflected into the camera by the inner glass pane, leading to disturbed images of the baked goods. It is therefore desirable to provide a heat treatment monitoring system that reduces disturbances of images of the baked goods captured through a double glass window. In food processing systems data concerning the structure of the processed food should be obtained without stopping the food processing, in order to not reduce a production output. It is hence desirable to adjust the parameters of the aforementioned devices of a food processing system or any other device in food processing, based on contactless measurement techniques. In order to make data captured by monitoring devices useful for automated baking or food processing it is desirable to provide a method for classifying a multitude of images recorded by monitoring devices observing a processing area of processed food and to provide a machine using the same. Once the data are suitably classified it is desirable to take advantage of cognitive capabilities in order to increase the heat treatment machine in flexibility, quality, and efficiency. This can be further separated in the objects:
It is desirable to provide a system being able to gain knowledge by learning from a human expert how to abstract relevant information within food processing and how to operate an oven, wherein the system should show reasonable behavior in unknown situations and should be able to learn unsupervised. It is desirable to provide a system increasing the efficiency by closed-loop control of energy supply adapting to changes in processing time and maintaining a desired food processing state. It is desirable to provide a system having flexibility for individually different food processing tasks by adapting to different types of food or process tasks.

In particular, to capture image from a heat treatment chamber (oven) it is advantageous to use an illumination in combination with outside window tinting or darkening. This provides less impact of outside light to the image processing of the oven inside pictures. It is recommended to tint the window by at least 40 %.

For industrial food processing it is advantageous to use a laser line generator, or any other light source, and a camera sensor, or any other optical sensor, to grasp information about the food being processed. With a procedure, also known as laser triangulation, a laser line may be projected onto a measurement object, in order to obtain its characteristics. Moreover, it is advantageous that the heat treatment of food is automated such that no further human interaction is necessary besides loading and unloading the oven or the heat treatment machine. However, even this step may be automated, if desired. In order to do so the heat treatment machine needs a treatment chamber that is camera monitored and equipped with an inside treatment chamber temperature sensor such as a thermometer. Instead of using a camera an array of at least two photodiodes may also be used. It is advantageous to use more sensors acquiring signals related to inside treatment chamber humidity, time, ventilation, heat distribution, load volume, load distribution, load weight, temperature of food surface, and interior temperature of the treated food. The following sensors may as well be applied: hygrometer, laser triangulation, insertion temperature sensors, acoustic sensors, scales, timers, and many more. Further, cooling systems attached to any heat sensible sensor applied may be applied. For instance, this may be an electrical, air or water cooling system such as a Peltier cooler or ventilator, a thermoelectric heat pump, or a vapor-compression refrigeration, and many more.

Further it is advantageous that in a heat treatment process of food and in particular of baked goods with a heat treatment machine, such as an oven with heat treatment chamber, the inside temperature and the interior camera image or other sensors can be used for the control of power supply or treatment parameters. According to the invention, the camera image is suitable for the detection of parameters related to the changing volume and/or the color of the food during heating of these. According to a model machine learned or fixed prior to this, it can be determined with this method for the heat treatment machine, if the treated food is in a predefined desired process state, and with a closed-loop control of the power of the heat treatment process the process may be individually adjusted. The desired process result may be reached at several locally distributed heat treatment machines by distributing the parameters defined by the desired process conditions of the treated food. Moreover, the sensors used and the derived process data, in particular the camera image, may be used to determine the type and quantity of the food based on the data characteristics and thus to start appropriate process variants automatically.

According to another example, a heat treatment monitoring system comprises: a heat treatment machine comprising a heat treatment chamber, a double glass window comprising an inside window and an outside window, and an illumination apparatus for illuminating the inside of the heat treatment chamber, and a monitoring apparatus mounted to the heat treatment machine and comprising a camera to observe the inside of the heat treatment chamber through the inside window, wherein the visible transmittance of the outside window is lower than the visible transmittance of the inside window to reduce reflections within the double glass window structure and outside illumination effects on image processing of images recorded by the camera. Preferably, the outside window is darkened by a coating. Preferably, a metal foil or a tinting foil is applied at the outside window. Preferably, the outside window comprises a tinted glass. Preferably, the outside window has a maximum visible transmittance of 60% Preferably, the double glass window is a heat treatment machine door window of a heat treatment machine door of the heat treatment machine. Preferably, the monitoring apparatus is adapted to generate high dynamic range (HDR) processed images of the food to be heated within the heat treatment chamber. Preferably, the monitoring apparatus further comprises a casing and a camera sensor mount, to which the camera is mounted. Preferably, the casing is equipped with heat sinks and fans to provide cooling of the camera. Preferably, the heat treatment machine is a convection or a deck oven having at least two trays arranged in a stacked manner. Preferably, the camera is tilted in such a way in a horizontal and/or a vertical direction with regard to the double glass window to be adapted to observe at least two trays at once in the convection or deck oven. Preferably, the heat treatment monitoring system comprises at least two cameras to observe each tray separately. Preferably, the heat treatment monitoring system further comprises a control unit being adapted to process and classify the images of food observed by the camera based on training data for determining an end time of a heating process for the food. Preferably, the control unit is adapted to stop the heating of the heat treatment machine when the heating process has to be ended. Preferably, the control unit is adapted to open automatically the heat treatment machine door when the baking process has to be ended, or wherein the control unit is adapted to ventilate the heat treatment chamber with cool air or air when the heating process has to be ended.

According to another example, a heat treatment monitoring system comprises a sensor unit having at least one sensor to determine current sensor data of food being heated; a processing unit to determine current feature data from the current sensor data; and a monitoring unit adapted to determine a current heating process state in a current heating process of the monitored food by comparing the current feature data with reference feature data of a reference heating process. Preferably, the heat treatment monitoring system further comprises a learning unit adapted to determine a mapping of current sensor data to current feature data and/or to determine reference feature data of a reference heating process based on feature data of at least one training heating process. Preferably, the learning unit is adapted to determine a mapping of current sensor data to current feature data by means of a variance analysis of at least one training heating process to reduce the dimensionality of the current sensor data. Preferably, the learning unit is adapted to determine a mapping of current feature data to feature data by means of a variance analysis of at least one training heating process to reduce the dimensionality of the current feature data. Preferably, the variance analysis comprises at least one of principal component analysis (PCA), isometric feature mapping (ISOMAP) or linear Discriminant analysis (LDA) or a dimensionality reduction technique. Preferably, the learning unit is adapted to determine reference feature data of a reference heating process by combining predetermined feature data of a heating program with a training set of feature data of at least one training heating process being classified as being part of the training set by an user preference. Preferably, the heat treatment monitoring system further comprises a recording unit to record current feature data of a current heating process, wherein the learning unit is adapted to receive the recorded feature data from the recording unit to be used as feature data of a training heating process. Preferably, the sensor unit comprises a camera recording a pixel image of food being heated, wherein the current sensor data of the camera corresponds to the current pixel data of a current pixel image. Preferably, the current pixel data comprises first pixel data corresponding to a first color, second pixel data corresponding to a second color, and third pixel data corresponding to a third color. Preferably, the first, second and third color corresponds to R,G and B, respectively. Preferably, the camera is adapted to generate HDR processed pixel images as current pixel data. Preferably, the heat treatment monitoring system further comprises a classification unit adapted to classify the type of food to be heated and to choose a reference heating process corresponding to the determined type of food. Preferably, the heat treatment monitoring system further comprises a control unit adapted to change a heating process from a proofing process to a baking process based on a comparison of the current heating process state determined by the monitoring unit with a predetermined heating process state. Preferably, the heat treatment monitoring system further comprises a control unit adapted to control a display unit being adapted to indicate a remaining time of the heating process based on a comparison of the current heating process state determined by the monitoring unit with a predetermined heating process state corresponding to an end point of heating and/or to display images of the inside of the heat treatment chamber. Preferably, the heat treatment monitoring system further comprises a control unit adapted to alert a user, when the heating process has to be ended. Preferably, the heat treatment monitoring system further comprises a control unit adapted to control a temperature control of a heating chamber, means to adapt humidity in the heat treatment chamber by adding water or steam, a control of the ventilating mechanism, means for adapting the fan speed, means for adapting the differential pressure between the heat treatment chamber and the respective environment, means for setting a time dependent temperature curve within the heat treatment chamber, means for performing and adapting different heat treatment procedures like proofing or baking, means for adapting internal gas flow profiles within the heat treatment chamber, means for adapting electromagnetic and sound emission intensity of respective electromagnetic or sound emitters for probing or observing properties of the food to be heated. Preferably, the at least one sensor of the sensor unit comprises at least one of hygrometer, insertion temperature sensor, treatment chamber temperature sensor, acoustic sensors, scales, timer, camera, image sensor, array of photodiodes, a gas analyser of the gas inside the treatment chamber, means for determining temperature profiles of insertion temperature sensors, means for determining electromagnetic or acoustic process emissions of the food to be treated like light or sound being reflected or emitted in response to light or sound emitters or sources, means for determining results from 3D measurements of the food to be heated including 3D or stereo camera systems or radar, or means for determining the type or constitution or pattern or optical characteristics or volume or the mass of the food to be treated.

The accompanying drawings, which are included to provide a further understanding of the invention and are incorporated in and constitute a part of this application, illustrate embodiment(s) of the invention and together with the description serve to explain the principle of the invention. In the drawings:

Figs. 1A and 1B show a schematic cross sectional view and a schematic side view of an embodiment of a heat treatment monitoring system.

Figs. 2A and 2B show the reflection properties of a conventional double glass window and a double glass window of an embodiment of a heat treatment monitoring system.

Figs. 2C shows the reflection properties of a triple glass window of an embodiment of a heat treatment monitoring system.

Fig. 3 shows different schematic views of another heat treatment monitoring system.

Fig. 4 shows a schematic view of an embodiment of an image sensor.

Fig. 5 shows a schematic view of another embodiment of an image sensor.

Figs. 6A and 6B show a schematic front and side view of another embodiment of a heat treatment monitoring system.

Fig. 6C shows a schematic perspective view of another embodiment of a heat treatment monitoring system comprising a deck oven.

Fig. 6D shows a detailed perspective view A of the schematic perspective view of another embodiment of a heat treatment monitoring system of Fig. 6C.

Fig. 6E shows a detailed plan view A of the schematic perspective view of another embodiment of a heat treatment monitoring system of Fig. 6C.

Fig. 6F shows a detailed schematic perspective view of a monitoring apparatus having a mount for a cooling device of Fig. 6D.

Fig. 6G shows a detailed schematic plan view of a monitoring apparatus having a mount for a cooling device of Fig. 6D.

Fig. 6H shows a detailed schematic plan view of a monitoring apparatus of Fig. 6D.

Fig. 6I shows a detailed schematic side view of a monitoring apparatus of Fig. 6D.

Fig. 7A shows a schematic perspective view of another embodiment of a heat treatment monitoring system comprising a deck oven.

Fig. 7B shows a schematic perspective view of a monitoring apparatus of the heat treatment monitoring system of Fig. 7A.

Fig. 7C shows a schematic front view of the monitoring apparatus of the heat treatment monitoring system of Fig. 7A.

Fig. 7D shows a schematic side view of the monitoring apparatus of the heat treatment monitoring system of Fig. 7A.

Fig. 7E shows a schematic cross-sectional view of the monitoring apparatus of Fig. 7D taken along the section plane A-A'.

Fig. 8A shows a schematic perspective view from a bottom/left side of another embodiment of a heat treatment monitoring system comprising a cooling or storing rack.

Fig. 8B shows a detailed view of part B of the heat treatment monitoring system of Fig. 8A.

Fig. 8C shows a schematic front view from a back side of the heat treatment monitoring system of Fig. 8A.

Fig. 8D shows a schematic cross-sectional view of the heat treatment monitoring system of Fig. 8C taken along the section plane A-A'.

Fig. 9A shows a schematic perspective view of a monitoring apparatus of the heat treatment monitoring system of Fig. 8A.

Fig. 9B shows a schematic back view of the monitoring apparatus of the heat treatment monitoring system of Fig. 8A.

Fig. 9C shows a schematic side view of the monitoring apparatus of the heat treatment monitoring system of Fig. 8A.

Fig. 9D shows a schematic cross-sectional view of the monitoring apparatus of Fig. 9C taken along the section plane A-A'.

Fig. 9E shows a schematic cross-sectional view of the monitoring apparatus of Fig. 9D taken along the section plane B-B'.

Fig. 10 shows a schematic view of an embodiment of a heat treatment chamber.

Fig. 11 shows a schematic top view of an embodiment of a tray with indication for arranging dough.

Fig. 12 shows a schematic view of an embodiment of a sensor system integrated in an oven rack.

Fig. 13 shows a schematic data processing flow of an embodiment of a heat treatment monitoring system .

Fig. 14 shows a cognitive perception-action loop for food production machines with sensors and actuators according to the present invention.

Fig. 15 shows categories of linear and nonlinear dimensionality reduction techniques.

Fig. 16 shows a mapping of two-dimensional test data to a three-dimensional space with an optimal linear separator.

Fig. 17 shows an architecture according to the present invention and component groups to design agents for process monitoring or closed-loop control in food production systems using a black-box model with sensors and actuators.

Fig. 18A shows a schematic cross sectional view of an embodiment of a heat treatment monitoring system.

Fig. 18B shows a block diagram of an embodiment of a heat treatment monitoring system.

Fig. 19 illustrates a feature mapping process according to an embodiment.

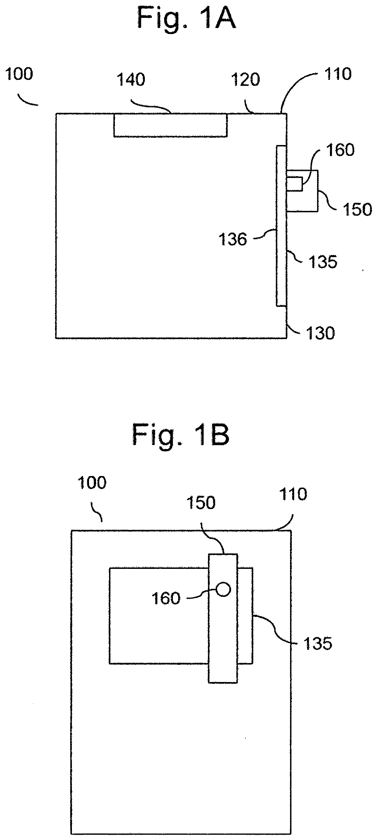

Figs. 1A and 1B illustrate a heat treatment monitoring system 100 according to an embodiment of the present invention. Fig. 1A illustrates a schematic cross-sectional top view of the heat treatment monitoring system 100, while Fig. 1B illustrates a schematic front view thereof.

As illustrated in Figs. 1A and 1B the heat treatment monitoring system or baking monitoring system or proofing and/or baking monitoring system 100 has an oven 110 with a heat treatment or oven chamber 120, at least one double glass window 130 at a side wall of the oven 110 and an illumination apparatus 140 inside the oven chamber 120.

The heat treatment machine or oven 110 may be any oven that may be conventionally used for cooking of food, in particular for baking or proofing of bread. The oven may cook food using different techniques. The oven may be a convection type oven or a radiation type oven.

The heat treatment or oven chamber 120 captures most of the interior of the oven 110. Inside the oven chamber 120 food is cooked. The food may be placed on a differing number of trays which can be supported at the oven chamber walls. The food may also be placed on moveable carts with several trays, which can be moved inside the oven chamber 120. Inside the oven chamber 120 a heat source is provided, which is used to cook the food. Moreover, also a ventilation system may be comprised inside the oven chamber to distribute the heat produced by the heat source more evenly.

The inside of the oven or heat treatment chamber gets illuminated by an illumination apparatus 140. The illumination apparatus 140 may be arranged inside the oven or heat treatment chamber as shown in Fig. 1A. The illumination apparatus 140 may also be located outside the oven chamber 120 and illuminate the oven chamber 120 through a window. The illumination apparatus 140 may be any conventional light emitting device, e.g. a light bulb, a halogen lamp, a photodiode or a combination of several of these devices. The illumination apparatus 140 may be focused on the food to be cooked inside the oven chamber 120. In particular, the illumination apparatus 140 may be adjusted or focused such that there is a high contrast between the food to be cooked and the surrounding interior of the oven chamber 120 or between the food and tray and/or carts on which the food is located. Such a high contrast may be also supported or generated solely by using special colors for the light emitted by the illumination apparatus 140.

In a wall of the oven chamber 120 a window is provided. In order to prevent a loss of heat out of the oven chamber 120, the window is preferably a double glass window 130 having an outer glass pane or outside window 135 and an inner glass pane or inside window 136. The double glass window 130 may prevent heat dissipation between the inside window 136 and the outside window 135 by providing a special gas or a vacuum between the inside window 136 and the outside window 135. The double glass window 130 may also be cooled by air ventilation between the inside window 136 and the outside window 135 to prevent a heating of the outside window 135, wherein no special gas or a vacuum is provided between the inside window 136 and the outside window 135. The illumination apparatus 140 may be also be provided between the inside window 136 and the outside window 135. The outter glas surface of the outside window 135 is less hot and thus suitable for mounting a camera 160. It may be further benefitial to use an optical tunnel between the inside window 136 and the outside window 135, because this again reduces reflections and heat impact.

Through the double glass window 130 a cooking or baking procedure inside the oven chamber 120 may be observed from outside the heat treatment machine or oven.

As is illustrated in Fig. 1B a monitoring apparatus 150 is mounted on the heat treatment machine or oven 110. The monitoring apparatus 150 is mounted across the outside window 135 of the double glass window 130 and comprises a camera 160 arranged next to the outside window 135, which is used to observe the food inside the oven chamber 120 during cooking or baking. The camera 160 may be any conventional camera which is able to provide image data in a computer accessible form. The camera 160 may for example be charged coupled device (CCD) camera or a complementary metal-oxide-semiconductor (CMOS) camera. The camera 160 obtains images of the cooked food during the cooking procedure. As will be described below these images may be used for automatically controlling the cooking or baking procedure. Although the camera 160 is preferably mounted at an outside of the outside window 135 to be easily integrated within the monitoring apparatus 150, wherein the camera 160 then observes an inside of the heat treatment chamber 120 through the double glass window 130, the camera 160 may also be provided between the inside window 136 and the outside window 135 to observe an inside of the heat treatment chamber through the inside window 136.

However, a problem arises if an external light source is present outside of the oven chamber 120 in front of the double glass window 130.

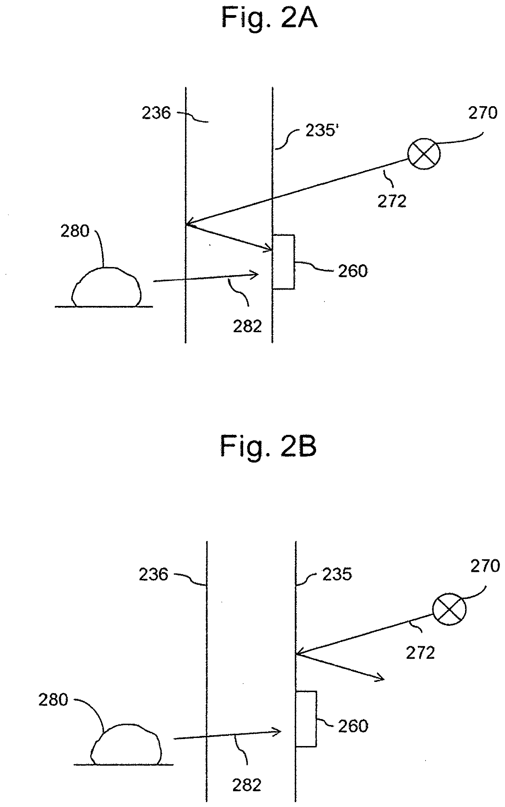

As illustrated in Fig. 2A, irritating light 272 emitted by an external light source 270 may pass through an outside window 235' of a double glass window, but might be reflected by the inside window 236 into a camera 260 observing food 280 to be cooked. Therefore, the camera 260 does not only obtain light 282 emitted or reflected from the food 280, but also the irritating light 272, reflected at the inside wall 236. This result in a deterioration of the image data provided from the camera 260 and may therefore adversely affect an automatic baking process.

In the present embodiment this adverse effect is prevented by hindering the irritating light to pass through an outside window 235 (Fig. 2B). This may be done by tinting or darkening the outside window 235. Then, the irritating light 272 is reflected or absorbed by the outside window 235 and does not reach the inside window 236. Hence, no irritating light 272 is reflected into the camera 260 by the inside window 236 and the camera 260 captures only correct information about the food 280. Therefore, according to the present embodiment a deterioration of the automated food processing procedure is prevented by tinting or darkening the outside window 235.

Thus, to capture images from the heat treatment chamber 120 of the oven 110, it is advantageous to use an illumination apparatus 140 in combination with tinting or darkening of the outside window 235. This provides less impact of outside light to the image processing of the oven inside pictures.

According to the present invention, the visible transmittance of the outside window 135 is lower than the visible transmittance of the inside window 136. Herein, the visible transmittance of the outside window 135 is lower than 95%, more preferably lower than 80%, and in particular lower than 60% of the visible transmittance of the inside window 136. Further, the outside window 235 of the double glass window 130 may have preferably a maximum visible transmittance of 75%. The visible transmittance is the transmittance of light being incident normal to the glass window surface within a visible wavelength range, i.e. between 380 nm to 780 nm. It is further preferable to tint the window by at least 40%, thus the maximum visible transmittance is 60%. In other words, at least 40% of the incoming light is absorbed or reflected by the outside window 235 and 60% of the light is transmitted through the outside window 235. The inside window 236 may have a visible transmittance of usual glass. It is further preferred to tint the window by at least 60%, leading to a transmittance of 40%. A darkening coating or foil may be applied advantageously at the outside window of a double glass door of the oven to prevent deterioration of the coating due to thermal effects. Due to the darkening of the outside window, reflections of the light coming from an outside of the oven can be significantly reduced. The oven door window can be darkened by a metal foil or coating (mirrored window) or by a tinting foil. The oven door window can be a tinted window comprising e.g. a tinted outside and/or inside glass. If the camera is mounted on the outside window 135, the darkening or reflectivity of the outside window 135 at the location of the camera may be spared, for example by having a hole within the coating to ensure an observation of the camera through the hole in the coating of the outside window 135, wherein the area of the hole is not included for the determination of the transmittance of the outside window 135.

The oven or heat treatment machine 110 may further comprise an oven door or heat treatment machine door, by which the oven chamber 120 can be opened and closed. The oven door may comprise a window, through which the oven chamber 120 can be observed. Preferably, the window comprises the double glass window 130 for preventing thermal loss of the heating energy for the oven chamber 120. Thus, the heat treatment monitoring system 100 may comprise the monitoring apparatus 150 and the oven 110 comprising the monitoring apparatus 150, or an oven 110 having the monitoring apparatus 150 mounted to its oven door.

Thus, also reflections within the double glass window structure of the oven door window can be reduced. Consequently, outside illumination effects on image processing are neglectable. Thus, with a respective illumination intensity of the oven chamber 120, the inside of the oven chamber 120 may be observed by the camera 160 of the monitoring apparatus 150.

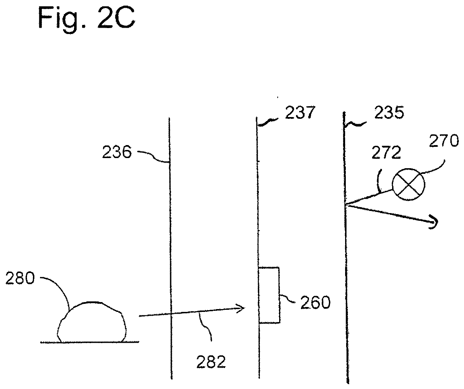

Fig. 2C shows a further embodiment of the present invention. Some heat treatment chambers 120 such as proofers or ovens have glass windows with two, three or more glass panels or glass windows. Often these windows are part of an oven door of the oven. It is preferred to integrate a visual sensor such as the camera 260 or an array of photodiodes at the outside of any of these glass panels or windows. As shown in Fig. 2C, in three glass panel or window structures such as a triple glass window having the inside window 236 as described above, the outside window 235 as described above, and a middle window 237 between the outside glass window 235 and the inside glass window 236, it may be beneficial to arrange the camera 260 between the outside window 235 and the middle window 237, wherein the camera 260 is arranged at an outside surface of the middle glass window 237, as it may be the sweet point of minimizing both heat impact on the camera 260 and reducing reflections due to the employment of the darkened outside window 235. In the embodiment of Fig. 2C, the visible transmittance of the middle window 137 may be the same as that of the inside window 136. The relationship between the visible transmittance of the outside window 135 and of the inside window 136 is preferably the same as described above with regard to Figs. 2A and 2B. However, the visible transmittance of the middle glass window 237 may be lower than that of the inside glass window 236, comparable to the relationship of visible transmittances of the inside glass window 236 and the outside glass window 235 as described above. Furthermore, any one of the inside, middle and outside glass windows 235 to 237 may be darkened, wherein the camera 260 may be arranged at an outside surface of the respective darkened glass window 235 to 237, respectively.

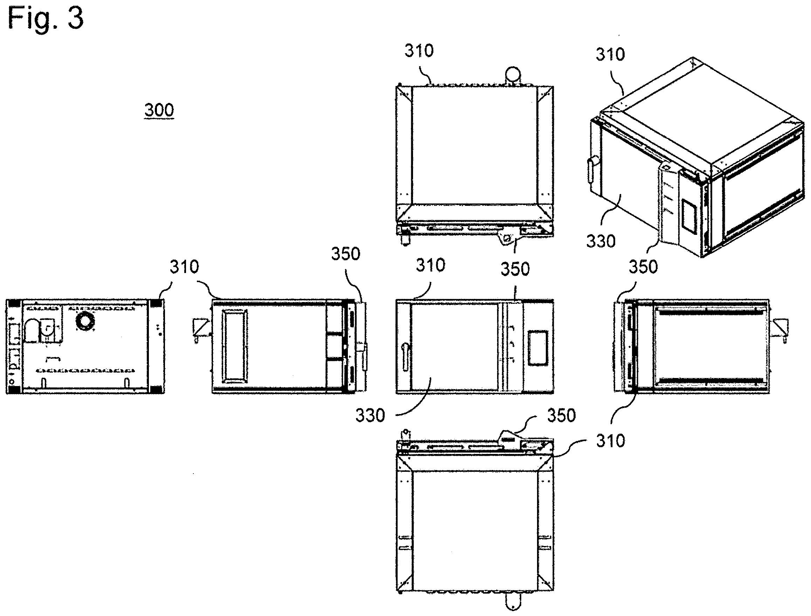

Fig. 3 shows different views of an embodiment of the heat treatment monitoring system illustrated in Figs. 1A and 1B.

As illustrated in Fig. 3, a monitoring apparatus 350 is mounted to the front side of an deck oven 310 of a heat treatment monitoring system 300. The monitoring apparatus 350 comprises a casing, a camera sensor mount, and a camera mounted to the camera sensor mount to observe an inside of an oven chamber through an oven door window 330. The camera is tilted in such a way in a horizontal and/or a vertical direction with regard to the oven door window 330 to be adapted to observe at least two baking trays at once in the deck oven 310. When designing the casing preferably all holes and mountings are mirrored so the casing can be attached to ovens or proofers that open from left and oven doors or proofer doors that open from right.

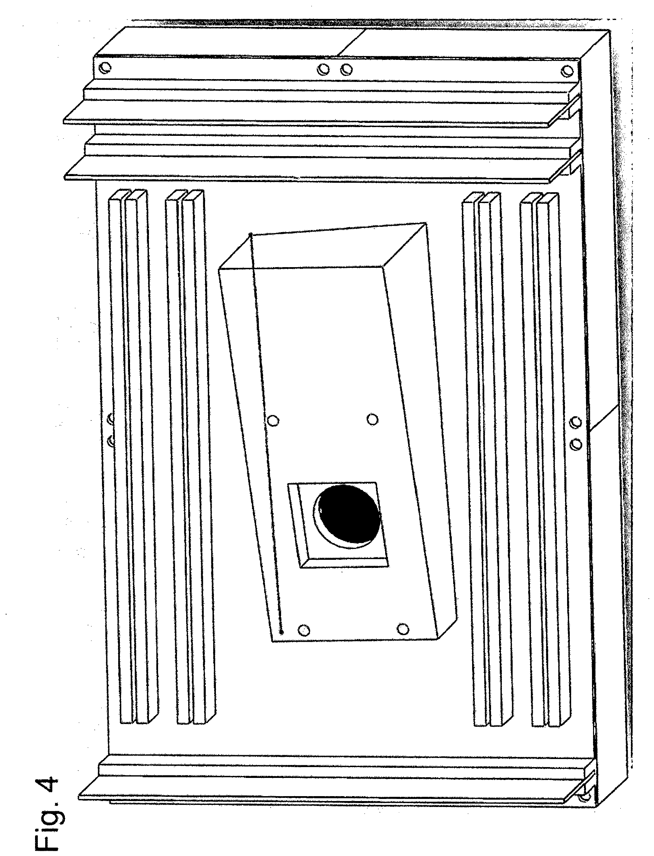

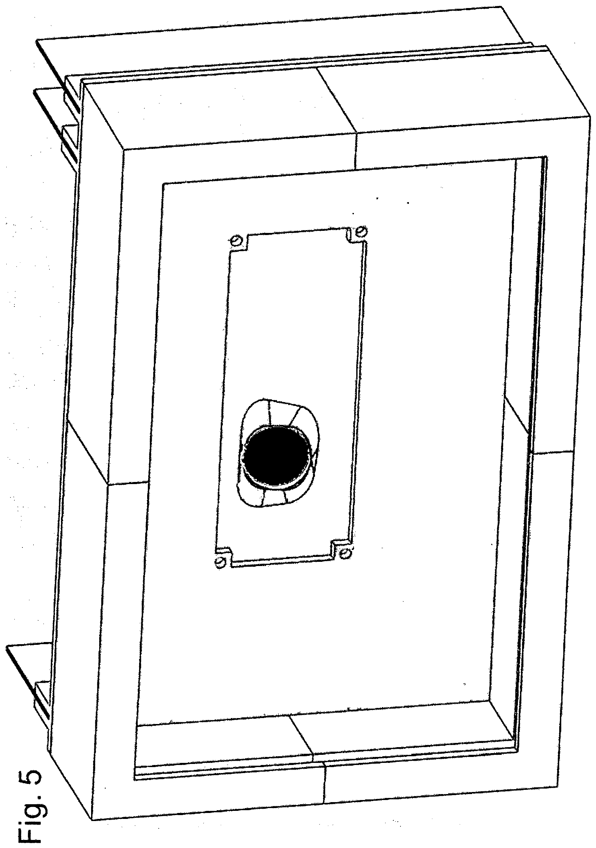

According to another embodiment the sensor mounting and the casing are cooled with fans for the inside. Further as can be seen from Figs. 4 and 5 the camera sensor mount of the monitoring apparatus 350 may be equipped with heat sinks and fans to provide cooling. The sensor mount and the casing may be optimized to have an optimal viewing angle to see two baking trays at once in the oven.

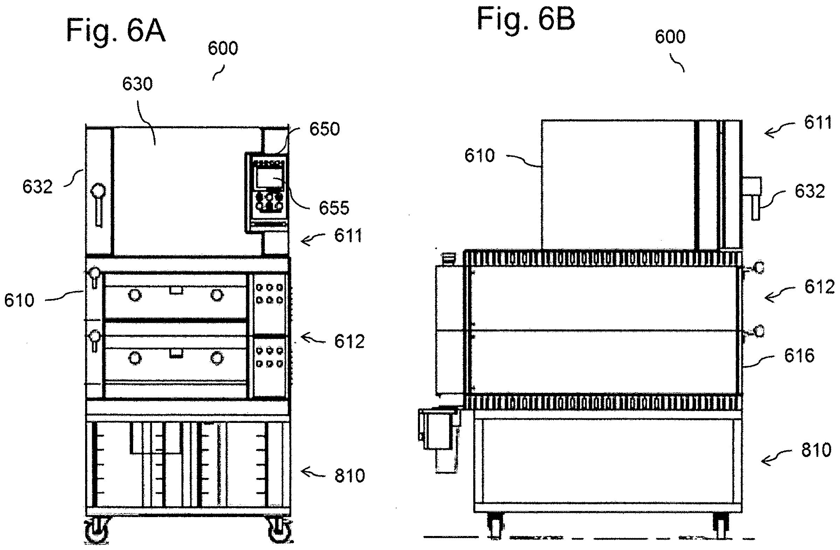

Figs. 6A and 6B show a top view and a side view of another embodiment of the heat treatment monitoring system illustrated in Figs. 1A and 1B, respectively.

As illustrated in Fig. 6A, a monitoring apparatus 650 is mounted on an convection oven 611 of an oven 610 of a heat treatment monitoring system 600. The monitoring apparatus 650 overlaps partially with a double glass window 630 of an oven door 632. The monitoring apparatus 650 comprises a camera inside a casing. Moreover, the monitoring apparatus 650 comprises a display 655, which allows information to be displayed to a user and enables a user interaction.

The oven 610 may have the convection oven 611 on top and two deck ovens 612 underneath as illustrated in Figs. 6A and 6B.

Moreover, according to an embodiment the monitoring apparatus 150 may comprise an alert device to inform the user when the baking process has to be ended. In addition, the monitoring apparatus 150 may comprise a control output to stop, for example the heat treatment of the oven 110 and/or to open automatically the oven door and/or to ventilate the oven chamber 120 with cool air or air. The oven 110 and the monitoring apparatus 150 form together the heat treatment monitoring system 100.

According to a further embodiment, the monitoring apparatus 150 is adapted to generate high dynamic range (HDR) processed images of baking goods within the oven chamber 120. This is particularly advantageous in combination with the tinted outside window 135, since the light intensity of the light coming from the baking chamber 120 inside is reduced by the tinting foil and the HDR processing enables better segmentation. Moreover, by using HDR processing a contrast between baking goods and their surroundings like oven walls or trays may be enhanced. This enables the heat treatment monitoring system 100 to determine a contour or shape of baking goods even more precisely.

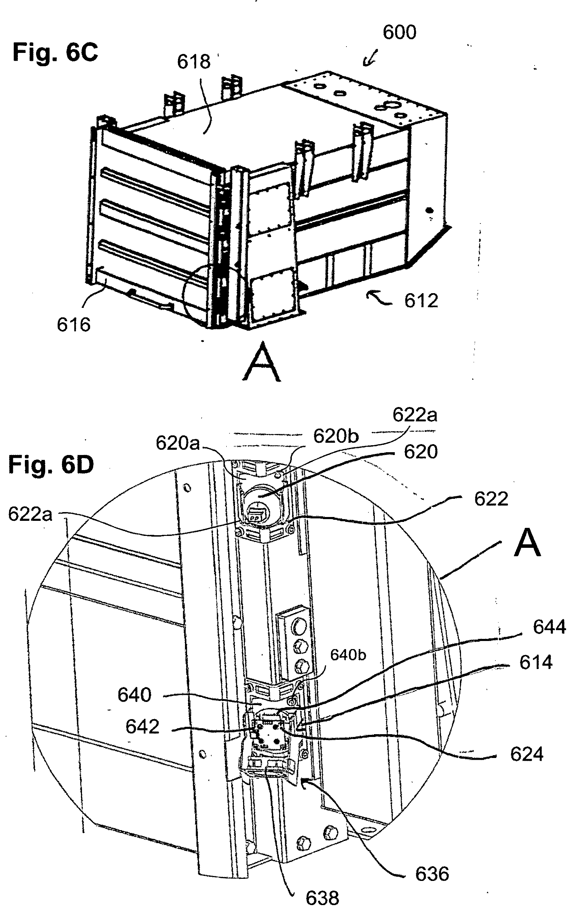

Figs. 6C to 6I show a further embodiment of a heat treatment monitoring system 600, in case a monitoring apparatus 614 is used for a deck oven 612, which may have no glass windows integrated in an oven door 616.

In order to capture the scene inside a heat treatment chamber 618, it usually is beneficial to illuminate the scene. In current ovens halogen lamps 620 are frequently used, but other light sources may be used as well. In one embodiment of the invention, an existing lighting source mounting 622 for a halogen lamp 620 is used to integrate the monitoring apparatus 614 comprising a sensor and illumination unit 624 within one illumination mount 622. This has the advantage that the integration of the monitoring apparatus 614 may easily be retrofitted into existing heat treatment chambers 618, by replacing the previous light source 620 with the monitoring apparatus 614 comprising the sensor and illumination unit 624. In order to achieve this goal the sensor and illumination unit 624 consists of at least one visual sensor such as a camera 626 and at least one camera light source 628 such as several light emitting diode (LEDs) 634 encircling the camera 626. The camera light source 628 may also comprise at least one light emitting diode 634 arranged next to the camera 626.

It is of advantage to equip the monitoring apparatus 614 with a power adaptor 615 connectable to a power supply adaptor of the lighting source mounting 622 and with electrics converting the voltage or power supply provided by the lighting source mounting 622 to the power necessary to supply the LEDs 634 and the camera 626. It is further of advantage to integrate a cooling device 636 into this mounting to ensure proper operation of the sensor and illumination unit 624. The cooling device 636 may comprise at least one of a fan 638, a peltier element, a water cooling device, a heat sink or a cooling plate.

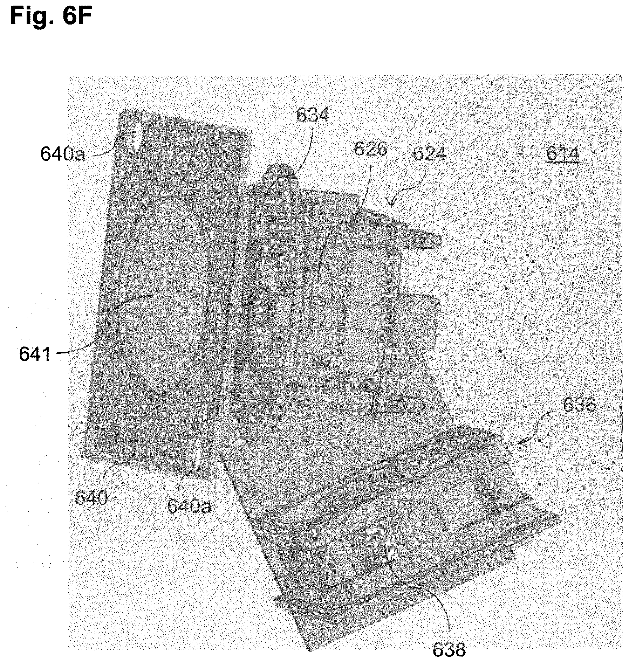

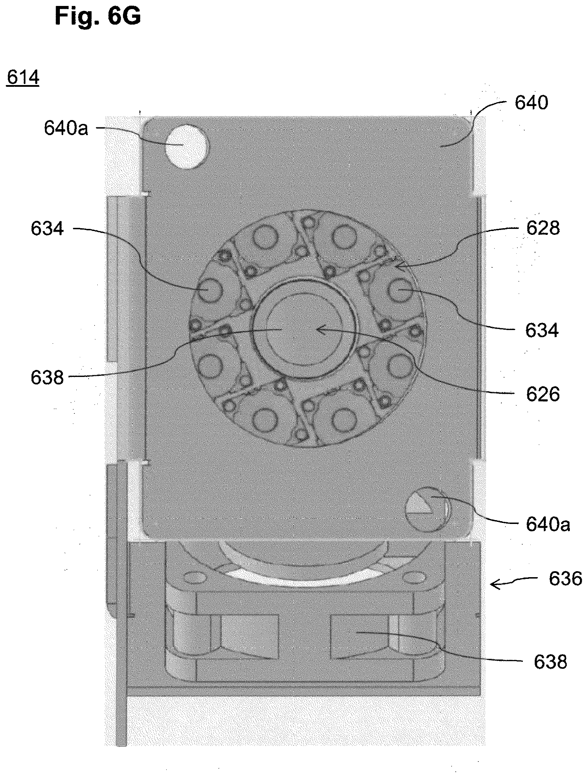

In Figs. 6F and 6G, a fan 638 combined with the camera 626 and the camera light source 628 is demonstrated. In order to prevent reflections at one of may be several glass planes coming from the illumination, it is advantageous to integrate an optical tunnel consisting of a hose like structure starting from the visual sensor and supporting the reflective surface, protecting the visual sensor from direct reflections by the glass panel surface from the camera light source 628. It is of advantage to integrate optics into this optical tunnel that allows wide range capturing of the scene inside of the heat treatment chamber 618. A wide-angle lens 638 may be part of such an optical system. The optical system of the camera 626 may have an integrated wave length band pass filter that matches the wavelength emitted by the camera light source 628. This may help to reduce the influence of other light sources that may illuminate the scene inside the heat treatment chamber 618 such as the room light inside of a bakery.

It is part of the invention to continue the optical tunnel through all of may be several glass planes. Thus, if it is a three glass plane structure to integrate an optical tunnel between the first and second as well as between the second and third glass plane and between the third glass plane and the visual sensor counted from the inside of the heat treatment chamber. If in another embodiment of the invention the visual sensor or camera is placed within the second and third glass plane or the first and second glass plane, the optical tunnel may be designed accordingly to protect from reflections. It further may be of advantage to design the optical tunnel dark from the inside and reflective from the outside. The darkness of the inside is further reducing undesired reflections. The reflective surface from the outside may further support illumination of the heat treatment chamber inside. An example of an optical tunnel is shown in Fig. 5 as part of the camera sensor mount. It is further of advantage to integrate heat elements at at least one of the glass planes, preferable the one at the inside of the heat treatment chamber in order to prevent the glass to get fogged-up due to eventual humidity inside of the heat treatment chamber 618 or oven or proofer. The special thing about the above embodiment is that it is in one unit with the camera 626, so a ring of LED lights 634 surrounding the camera sensor 626 and in the middle the camera 626 itself. The whole can be inserted into a standard halogen lamp holder 622, which supplies all the power and provides mounting. It has the advantage that older ovens can be supplied with our camera sensor 626 as easy as switching the light bulb. The whole thing is equipped with heat sinks and tunnel between light and camera is protecting the camera image against reflections. If necessary the glass may be heated in order to prevent fog clouding the camera view.

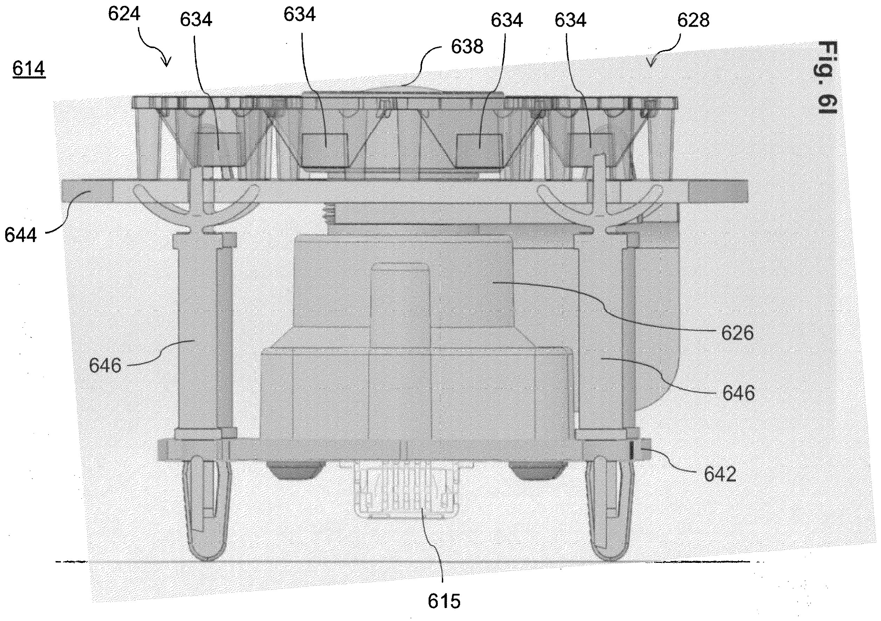

As can be seen from Figs. 6F and 6G, the monitoring apparatus 614 comprises a mounting part 640, which is adapted to be removably fixed to the lighting source mounting 622, e.g. by means of a screw coupling. Thus, the existing light source 620 can be easily replaced by the monitoring apparatus 614 by coupling the monitoring apparatus 614 to the lighting source mounting 622, which is already provided in a deck oven 611 for a light source 620 for illuminating a heat treatment chamber 618. As can be seen best from Fig. 6I, the camera 626 is mounted on a first board 642, which is connected to a second board 644 by means of spacers 646, on which the camera light source 628 comprising the LEDs 634 is mounted. The mounting part 640 is connected to the second board 644 by means of a bracket 648, which further acts as an heat conducting element. The power adaptor 615 is mounted on the first board 642 on a surface opposite to the surface, on which the camera 626 is mounted.

Thus, a heat treatment monitoring system 600 is claimed, which comprises a heat treatment machine 612. The heat treatment machine 612 comprises a heat treatment chamber 618. The heat treatment machine 612 further comprises at least one lighting source mounting 622 for mounting a light source 620 for illuminating the inside of the heat treatment chamber 618. The heat treatment monitoring system 600 further comprises a monitoring apparatus 614, which comprises a camera 626, a camera light source 628 and a mounting part 640, wherein the mounting part 640 is adapted to be removably fixed to the lighting source mounting 622. The mounting part 640 is preferably removably fixed to the lighting source mounting 622 by a screw coupling. The camera light source 628 preferably comprises at least one light emitting diode (LEDs) 634 encircling the camera 626. The camera light source 628 preferably comprises at least two light emitting diode (LEDs) 634 encircling the camera 626. The camera light source 628 preferably comprises a plurality of light emitting diode (LEDs) 634 encircling the camera 626. The camera light source 628 preferably comprises at least one light emitting diode (LEDs) 634 surrounding the camera 626. The camera light source 628 preferably comprises at least two light emitting diode (LEDs) 634 surrounding the camera 626. The camera light source 628 preferably comprises a plurality of light emitting diode (LEDs) 634 surrounding the camera 626. The monitoring apparatus 614 preferably further comprises a cooling device 636. The cooling device 636 preferably comprises a fan 638. The cooling device 636 also preferably comprises at least one of a fan 638, a peltier element, a water cooling device, a heat sink or a cooling plate. Further, a method for integrating a monitoring apparatus 614 in heat treatment machine 612 is claimed, comprising the steps of: removing a light source 620 for illuminating the inside of a heat treatment chamber 618 of the heat treatment machine 610 from a lighting source mounting 622, coupling a monitoring apparatus 614 with the lighting source mounting 622, and connecting a power adaptor 615 of the monitoring apparatus 614 with a power source adaptor of the lighting source mounting 622, which is adapted to provide the light source 620 with electric power.

As can be seen from Fig. 6D, the light source 620 is demounted in a retrofitting process together with a lamp holder 620a by loosen screws from a screw thread 622a of the lighting source mounting 622, which extend through fixing holes 620b of the lamp holder 620a to fix the lamp holder 620a at the lighting source mounting 622 by screw coupling. Thereafter, the mounting part 640 is inserted such that fixing holes 640a are at the same place as the fixing holes 620b of the lamp holder 620a. After positioning the mounting part 640, the mounting part 640 is fixed by screws 640b through the fixing holes 640a of the mounting part 640. Thus, the lighting source mounting 622 as shown in Fig. 6D comprises a rectangular through-hole providing access to the heat treatment chamber 618 and further comprises screw threads 622a for the fixing screws 640b of the mounting part 640 of the monitoring apparatus 614. The lamp holder 620a and the mounting part 640 comprise, in their middle parts, a circular window to close the through-hole of the lighting source mounting 622 providing an access to the heat treatment chamber 618. Thus, by exchanging the lamp holder 620a by the monitoring apparatus 614 with the mounting part 640, the through-hole of the lighting source mounting 622 is kept close. As described above, the glass of the window may be heated in order to prevent fog clouding the camera view. Furthermore, a circular polarizer or circular polarizing filter 641 may be mounted at a through-hole of the mounting plate 640, which is used to create circularly polarized light or alternatively to selectively absorb or pass clockwise and counter-clockwise circularly polarized light. By means of the circular polarizing filter 641, oblique reflections from the circular window are reduced. The circular polarizer may comprise a quarter-wave plate placed after a linear polarizer, wherein unpolarized light from the camera light source 628 is directed through the linear polarizer. The linearly polarized light leaving the linear polarizer is transformed into circularly polarized light by the quarter wave plate. The transmission axis of the linear polarizer needs to be half way (45°) between the fast and slow axes of the quarter-wave plate. In addition, it is advantageous to integrate an optical tunnel consisting of a hose-like structure starting from the camera 626 and supporting the window or the circular polarizing filter 641, protecting the camera 626 from direct reflections by the glass panel surface of the circular window from the camera light source 628.

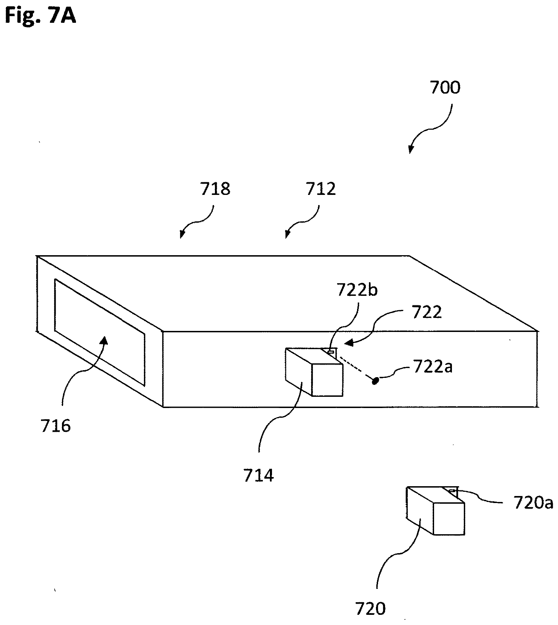

Fig. 7A shows a schematic perspective view of another embodiment of a heat treatment monitoring system 700, in case a monitoring apparatus 714 is used for a deck oven 712, which may have no glass windows integrated in an oven door 716. In order to capture the scene inside a heat treatment chamber 718, a light source housing 720 of an oven illumination is mounted to a lighting source mounting 722, which illuminates the inside of the heat treatment chamber 718 by means of a lamp, a halogen lamp, as shown, for example in the embodiment of Fig. 6C and Fig. 6D, or by means of at least one light emitting diode, which may be arranged in a matrix or an array. The monitoring apparatus 714 may be easily retrofitted into the existing heat treatment chamber 718 by replacing the previous light source housing 720 with the monitoring apparatus 714.

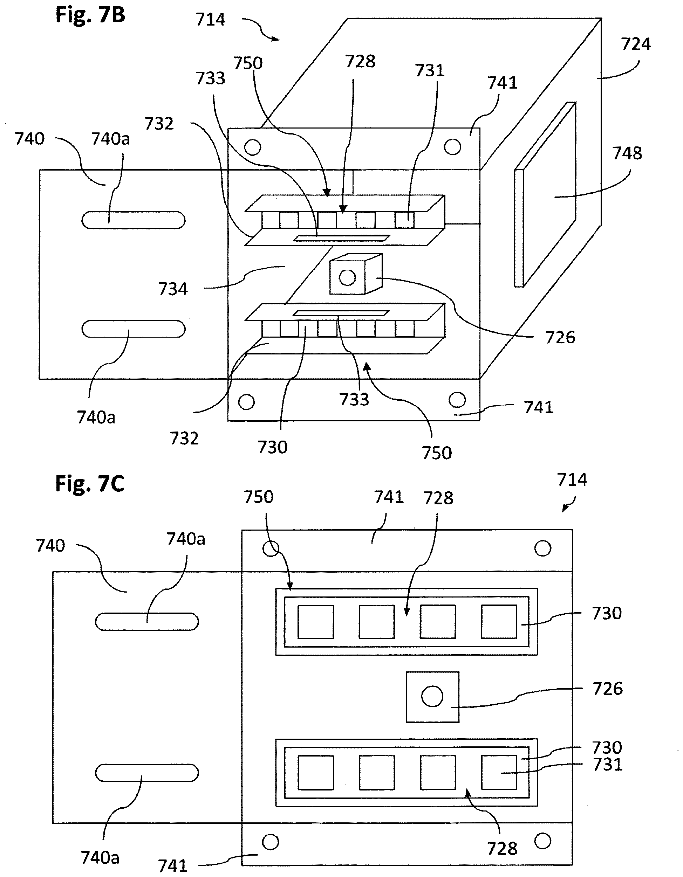

In the following, the monitoring apparatus 714 will be described in detail with regard to Fig. 7B to Fig. 7E. As can be seen from Fig. 7B and 7C, the monitoring apparatus 714 comprises a housing 724 having a mounting part 740, which is adapted to be removably fixed to the lighting source mounting 722 by means of a screw coupling. To retrofit the monitoring apparatus 714 into the heat treatment chamber 718, fixing screws 722a in fixing holes 720a for holding the illumination housing 720 are loosened from threads 722b and the monitoring apparatus 714 is mounted at the lighting source mounting 722 by fixing the mounting part 740 at the lighting source mounting 722 by screwing the fixing screws 722a in fixing holes 740a again into the threads 722b of the lighting source mounting 722. Furthermore, the monitoring apparatus 714 may also be fixed at the heat treatment chamber 718 by screw coupling at additional mounting parts 741. Thus, the lighting source mounting 722 as shown in Fig. 7A comprises a rectangular through-hole providing access to the heat treatment chamber 718 and further comprises screw threads 722b for the fixing screws 722a of the mounting part 740 of the monitoring apparatus 714.

The monitoring apparatus 714 comprises a camera sensor 726 and a camera light source 728. The camera light source 728 may comprise at least one light emitting diode (LED) bar 730 comprising at least two LEDs arranged in a line. As shown in Fig. 7B, two LED bars 730 are arranged above and below the camera sensor 726 to provide an illumination of the heat treatment chamber 718. The LED bar 730 comprises the LEDs and lenses 731 to reduce the angle of radiation to an angle being in a range of 60° to 20°. The LEDs are further provided with an opaque optics which diffuse the light evenly. A glass window for closing the through-hole of the lighting source mounting 722 into the heat treatment chamber 718 is chosen to minimize reflexions into the housing 724. The glass material of the window of the lighting source mounting 722 is preferably chosen to minimize reflections since it is highly resistant to surface attacks, reducing any permanent damage that unfavourably scatters light towards the camera 726. In addition, the positions of the LED bars 730 are chosen to minimize reflections into the housing 724, e.g. by providing blinds 732 above and below the LED bars 730 for forming an optical tunnel for the camera sensor 726. The camera sensor 726 is located near an opening 732 of the housing 724 towards the front of the heat treatment chamber 718. Within the blinds 732, mounting slots 733 are provided, in which optical filters such as a wavelength bandpass filter or a circular polarizing filter as described above with regard to Fig. 6A to 6I may be mounted.

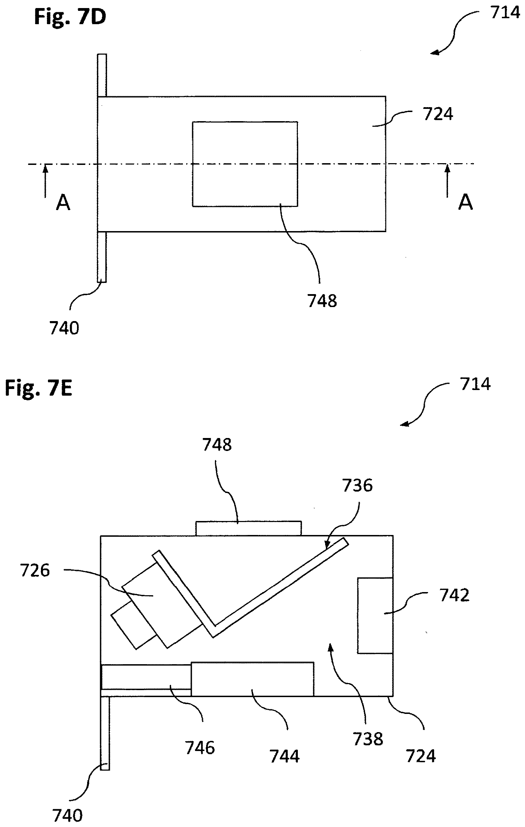

As can be seen from Fig. 7E, the camera sensor 726 is mounted on a divider 736 within the housing 724 that optimally positions the camera 726 to receive air cooling. Its location also allows for a clear view out of the housing 724 and into the heat treatment chamber 718. The monitoring apparatus 714 is designed to record images of baking products inside the heat treatment chamber 714. The monitoring apparatus 714 comprises, next to the camera sensor 726 and the camera light source 728, a cooling system 738. Furthermore, the housing 724 may accommodate a processing unit for controlling the monitoring apparatus 714 or for pre-processing measurement data of the camera sensor 726 such as pixel data. The housing 724 surrounds the components and is in contact with the window of the lighting source mounting 722 to protect the components where exposed to the heat treatment chamber 718. The housing 724 of the monitoring apparatus 714 is preferably made of stainless steel or a material having a low thermal conductance.

As can be seen from Fig. 7E being a cross-sectional view of the monitoring apparatus 714 of Fig. 7D taken along the section plane A-A, the cooling system 738 comprises a first fan 742, a second fan 744, a ducting 746 and the divider 736 to control and direct the airflow towards electronic parts such as the camera sensor 726 and the camera light source 728 that generate excess heat. The first fan 742 at the rear part of the housing 724 provides the main airflow into the housing 724, which is circulated through the electronics and exited at a side vent 748 that directs the hot air towards the ovens ventilation system. The second fan 744 arranged at the side of the housing 724, which is preferably a blower fan, bifurcates airflow through two ducts 750 (Fig. 7B) and into casings of both LED bars 730. Furthermore, the dual-glass cover facing the heat treatment chamber 718 is spaced to minimize the heat transfer into the housing 724 and the material is chosen to block radiation from the heat treatment chamber 718.

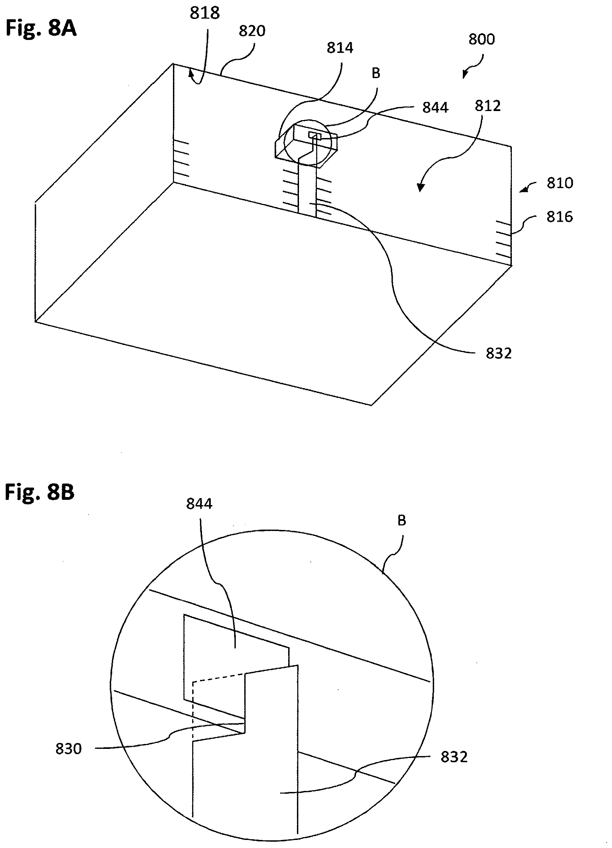

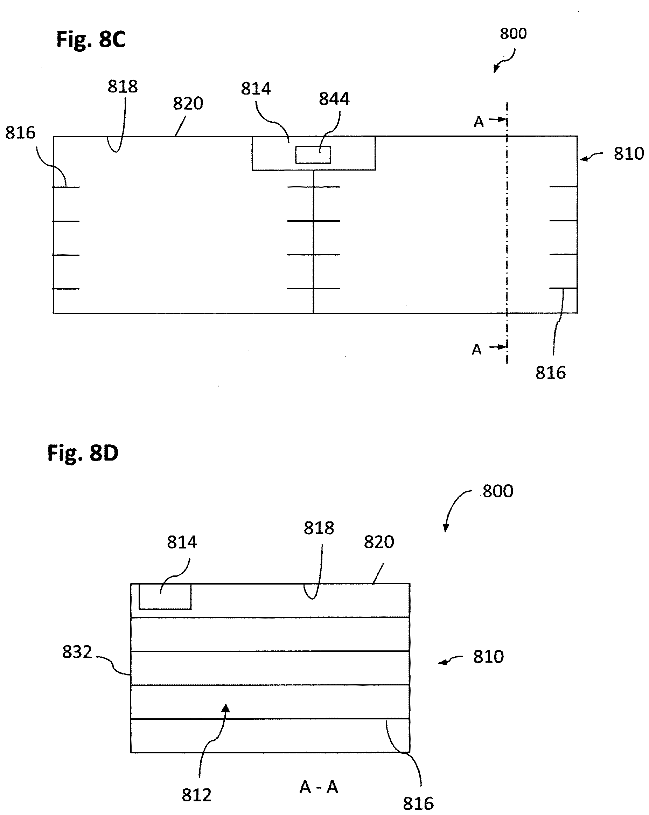

Fig. 8A shows a schematic perspective view from a bottom/left side of another embodiment of a heat treatment monitoring system 800 comprising a cooling or storing rack 810. An example of the storing rack 810 is shown in Fig. 6A and Fig. 6B. The storing rack 810 is adapted to hold a plurality of trays having the food to be heated arranged thereon. The storing rack 810 is provided to store the respective trays before inserted into a heat treatment chamber, for example the heat treatment chamber 618 or 718 for heat treatment of the food to be heated such as proving or baking.

The cooling or storing rack 810 comprises a cooling or storing chamber 812, in which a monitoring apparatus 814 is mounted at a middle front part being fixed with its upper surface to a bottom surface 818 of a top cover 820 of the cooling or storing chamber 812. The storing rack 810 further comprises a plurality of holding protrusions 816 to hold the trays to be heated. Furthermore, the storing rack 810 comprises a front opening 818, in which the trays may be inserted and deposited on the holding protrusions 816. The opening 818 of the cooling or storing chamber 812 may be closed by a door or by a window to protect the food to be heated from soiling. The cooling or storing rack 810 is provided to store food to be heated before heat treatment, in particular while warming deep frozen food to be heated, and to store food to be heated after heat treatment, in particular while cooling after a baking process.

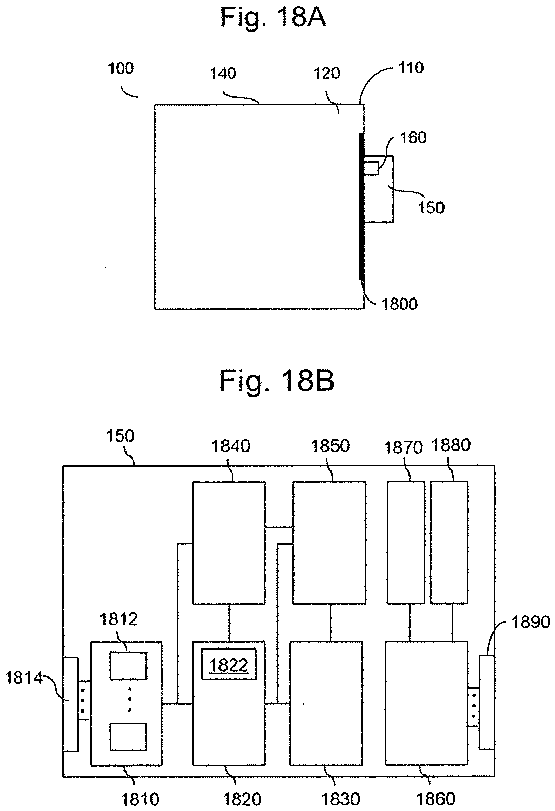

The monitoring apparatus 814 is adapted to record images of the inside of the storing chamber 812 and in particular of food to be heated placed on trays inserted into the storing chamber 812 before and/or after heat treatment. Thus, by recording images of the food to be heated, the food to be heated can be classified by a classification unit 1850, which will be discussed in all detail below with regard to Fig. 18A and 18B. In detail, the classification unit 1850 may perform image processing of a pixel image of the monitoring apparatus 814 of the food to be heated, e.g. by face recognition techniques. After determining the type of food to be heated (bread roll, muffin, croissant or bread), the classification can be used to select a respective predetermined heating program or stored reference heating process corresponding the respective type of food to be heated. In addition, subcategories can be provided, for example small croissant, medium croissant, or big size croissant. Furthermore, by classifying food to be heated after heat treatment, a feedback information may be generated, which may be further used to optimize the heat treatment process.

The food to be heated may be monitored by the monitoring apparatus 814 while being inserted into the storing chamber 812. For example, a loading process of the storing chamber 812 may be started by inserting a first tray into the lowest shelf and then further loading trays onto the holding protrusions 816 in an order starting from the lowest holding protrusion 816 to the highest holding protrusion 816. Thus, all trays loaded into the storing chamber 812 and the respective food to be heated placed thereon can be monitored by the monitoring apparatus 814 while inserting the trays and classified with regard to the type of the food to be heated, the amount per tray of food to be heated and the positioning of the food to be heated on the respective trays. Thus, every tray and the food to be heated placed thereon may be fully classified, the information of which is then implemented in a following heat treatment process by the heat treatment monitoring system as will be discussed below, in particular with regard to Fig. 18.

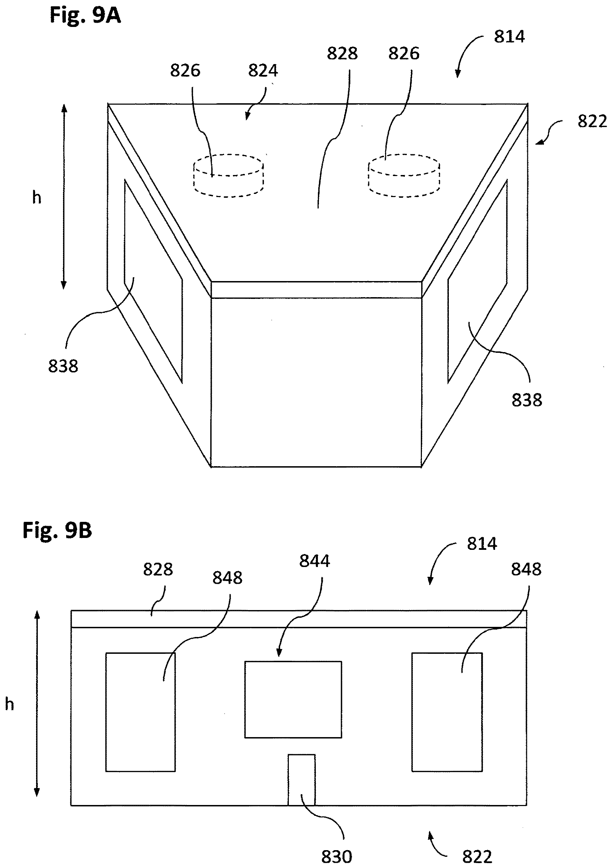

The monitoring apparatus 814 can be easily mounted at the bottom surface 818 of the top cover 820 of the storing chamber 812, as will be discussed in the following. In case the top cover 820 of the storing rack 810 is ferromagnetic, the monitoring apparatus 814 may be attached to the top cover 820 of the storing rack 810 by magnetic force. As can be seen from Fig. 9A, the monitoring apparatus 814 comprises a housing 822 including a top surface 824, wherein magnets 826 are placed on a mounting plate 828 on an inner surface of the mounting plate 828 inside the housing 822, the inner surface being opposite to the top surface 824 of the mounting plate 828. For mounting the monitoring apparatus 814 to the bottom surface 818 of the top cover 820 of the storing rack 810, the monitoring apparatus 814 is simply clipped to the desired position of the storing chamber 812, e.g. at the bottom surface 818 of the top cover 820 of the storing chamber 812. The monitoring apparatus 814 is preferably positioned centric on the front of the storing rack 810, wherein the back of the monitoring apparatus 814 (the part without camera windows 838, as will be discussed below) is facing the customer. To ensure constant positioning, a positioning slot 830 is provided on the backside of the monitoring apparatus 814 and is slid onto a middle flange 832 of the storing rack 810, as can be seen from Fig. 8A and in a detailed view in Fig. 8B. Thus, by providing the positioning slot 830, a centric positioning of the monitoring apparatus 814 being centric to the middle flange 832 of the storing rack 810 is ensured.

In case the top cover 820 of the storing rack 810 is not magnetic, a ferromagnetic sheet may be glued to the place, where the monitoring apparatus 814 is to be installed. To cover the heat treatment trays as best as possible, it is recommend to place the monitoring apparatus 814 centric either on the right or on the left side of the rack area of the storing rack 810.

Thus, the monitoring apparatus 814 is mounted on a ferromagnetic surface of the storing rack. e.g. of the top cover 820 by just clipping it on, wherein, in case the top cover 820 is non-magnetic, a ferromagnetic plate may be glued on the bottom surface 818 of the top cover 820 with silicon to mount the monitoring apparatus 814. Thus, by using silicon and magnets only, the mounting of the monitoring apparatus 814 is completely non-invasive and the system can be removed without leaving any traces.

The functioning and the structure of the monitoring apparatus 814 will be explained in detail with regard to the Figs. 9A to 9E in the following.

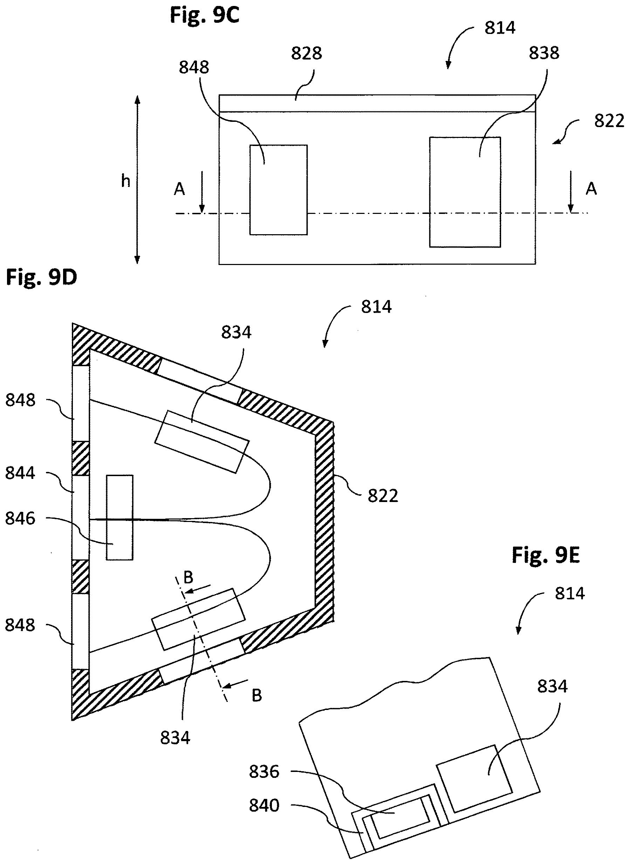

The monitoring apparatus 814 has a height h, which is preferably in a range between 1 cm and 20 cm, more preferred in a range between 5 cm and 15 cm, and in particular in a range between 5 cm and 10 cm. The monitoring apparatus 814 comprises at least one camera sensor 834 having a camera lighting source 836 comprising a light emitting diode (LED) bar mounted above the camera sensor 834 to illuminate the inside of the storing chamber 812 of the storing rack 810. As can be seen from Fig. 9A and 9C, windows 838 are provided in the housing 822 of the monitoring apparatus 814, which have a T-form, wherein the lower part of the T-formed window 838 is provided for the camera sight of the camera sensor 834 and the upper part of the T-window 838 is provided for the illumination of the at least LED bar 836. Thus, due to the low height of the monitoring apparatus 814, including lighting, camera recording, and a magnetic mounting, the monitoring apparatus 814 enables high flexibility and facilitates an installation on a multitude of different storing racks 810. The housing 822 is preferably fabricated of stainless steel and the T-formed windows 838 are formed preferably of scratch-proof plexiglass. Gaps of the housing 822 are sealed with food-proof silicon which makes the monitoring apparatus 814 easy to clean and more resistant to dust and splash water.

As can be seen from Fig. 9D and 9E, the monitoring apparatus 814 of Fig. 9A to 9E is formed symmetrically with regard to the symmetry plane S (Fig. 9D) extended orthogonally to the top surface 824. The monitoring apparatus 814 comprises two camera sensors 834, which are set at a 45° angle to the symmetry plane S, so they are able to cover most of the heat treatment trays regardless of the particular heat treatment machine. To the horizontal plane, an angle of 32.5° downwards is kept, as can be seen from the Fig. 9E being a cross-sectional view of the section plane B-B of Fig. 9D. To each camera sensor 834, a camera lighting source 836 such as an LED bar is associated, which is located above the camera sensor 834 and illuminates the scene of the inside of the storing chamber 812 of the storing rack 810 so the food to be heated can be displayed independent of ambient light. The LED bar 836 is shown schematically in Fig. 9E, the detailed structure of the LED bar 836 is comparable to the structure of the LED bar 730 as shown in Fig. 7B and 7C. Due to an U-shaped LED-holder 840 (Fig. 9E), the lights of the LED bars 836 are separated from the respective camera area, so no reflections occur on the recorded images of the camera sensors 834. The LEDs of the LED bar 836 are provided with opaque optics which diffuse the light evenly.

The monitoring apparatus 814 further comprises a cooling system 842, which includes an air inlet 844 at the backside of the housing 822, a fan 846, which draws the air through the air inlet 844, and an air outlet 848. The air is guided from the fan 846 to be caught on the front plane between the cameras 834 and is divided there. Afterwards it will flow past the LED bars 836 and cameras 834 and exits through the air outlets 848 on the left and right side with regard to the symmetry plane S of the housing 822, as can be seen best from Fig. 9D. In addition, the LED bars 836 have heat sinks on the back, so the heat will be transported from the LED bars 836 to the backside of the LED holder 840, where a part of the air is flowing.

The heat treatment system 800 thus comprises a storing rack 810 for storing trays with food to be heated thereon and a monitoring apparatus 814 for illuminating and recording images of the food to be heated on the trays stored within the storing rack 810. The monitoring apparatus 814 comprises at least one camera sensor 834 having a camera lighting source 836 mounted above the camera sensor 834. The camera lighting source is preferably a LED bar. The LED bar 836 is preferably arranged to be extended in a horizontal direction, wherein the camera sensor 834 is arranged in a middle part and below the LED bar 836 to form a T-form. The monitoring apparatus 814 comprises at least one T-formed window, through which the T-formed arrangement of the camera sensor 834 and the LED bar 836 illuminate and monitor the inside of the storing rack 810. The monitoring apparatus 814 comprises a housing 822 with an upper mounting plate 828, wherein the upper mounting plate 828 comprises at least one permanent magnet to magnetically fix the upper mounting plate 828 at a bottom surface 818 of a top cover 820 of the storing chamber 812 of the storing rack 810.

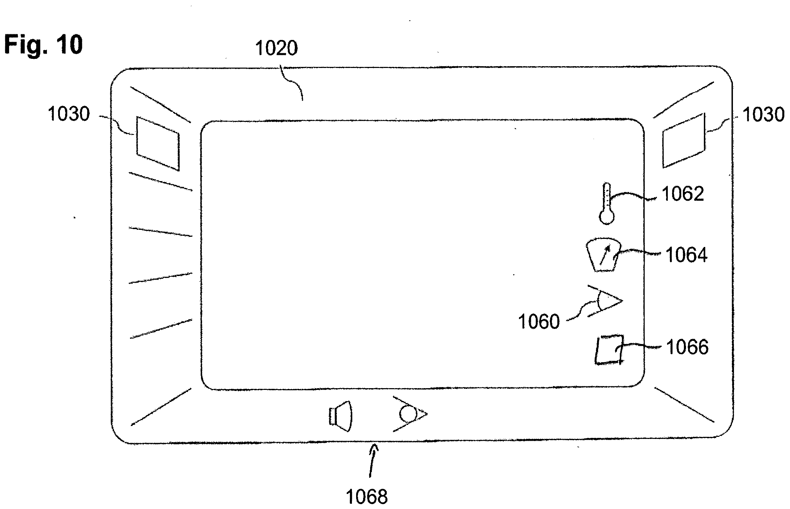

Fig. 10 demonstrates a possible sensor setup for a treatment chamber 1020 according to a further embodiment. As before, the treatment chamber 1020 is monitored with at least one camera 1060. The camera 1060 may also comprise an image sensor or a photodiode array with at least two photodiodes. It is advantageous to use more than one camera in order to monitor several trays that may be loaded differently. At least one camera 1060 may be positioned within the treatment chamber 1020 but it is advantageous to apply a window that reduces the heat influence towards the camera(s) 1060, in particular a double glass window 1030. The double glass window 1030 may be in any wall of the treatment chamber, as can be seen, for example, from the embodiment of Fig. 7A.

As described above it is advantageous to apply illumination to the treatment chamber 1020 by integrating at least one illumination apparatus as e.g. a bulb or a light-emitting diode (LED). Defined treatment chamber illumination supports taking robust camera images. It is further advantageous to apply illumination for at least one specific wavelength and to apply an appropriate wavelength filter for the camera or image sensor or photodiode array 1060. This further increases the robustness of the visual monitoring system. If the wavelength is chosen to be infrared or near-infrared and the image sensor 1060 and optional filters are chosen accordingly, the visual monitoring system may gather information related with temperature distribution that may be critical for certain food treatment processes.

The camera or visual system 1060 may be equipped with a specific lens system that is optimizing the food visualization. It is not necessary to capture images related to all loaded food, as the processing state of a load is very similar among the load itself. Further it may be equipped with an autofocus system and brightness optimization techniques. It is advantageous to use several image sensors 1060 for specific wavelengths in order to gather information about changes in color related to the food treatment. It is advantageous to position the camera or image sensors 1060 to gather information of volume change of the food during heat treatment. It may be in particular advantageous to setup a top-view of the food products.

It may also be advantageous to attach a second oven door or treatment chamber opening to a pre-existing opening system. The sensor system or in particular the camera, and the illumination unit may then be positioned at the height of the oven door window. This door on top of a door or double door system could be applied if the sensor system is retrofitted to an oven.

Each of the monitoring apparatuses described above may be mounted to the front side of an oven, as can be seen for example in Figs. 1A, 1B, 3, 6A, and 6B. The monitoring apparatus comprises a casing, a camera sensor mount, and a camera mounted to the camera sensor mount to observe an inside of an oven chamber through an oven door window. The camera is tilted in such a way in a horizontal and/or a vertical direction with regard to the oven door window to be adapted to observe at least two baking trays at once in the deck oven. The monitoring apparatus may further comprise an alert device to inform the user when the baking process has to be ended. In addition, the monitoring apparatus may comprise a control output to stop, for example the heating of the oven and/or to open automatically the oven door and/or to ventilate the oven chamber with cool air or air. The oven and the monitoring apparatus form together a heat treatment monitoring system .

As discussed above one camera sensor is used to observe the baking processes. According to another embodiment it is beneficial to use several camera sensors. If every tray within a heat treatment chamber has at least one camera sensor aligned, a monitoring and control software may gain information for every tray individually. Thus, it is possible to calculate a remaining baking time for every tray.

The remaining baking time may be used to alert the oven user to open the door and take out at least one of the trays, if the baking time has ended before the other trays. According to the invention it is possible to alert the user by means of a remote or information technology system. The alert may happen on a website display, on a smart phone, or on a flashlight next to the counter. This has the advantage that the user is being alerted at their usual working place that may be not in front of the oven.

In the embodiments described above the data capturing is performed mainly by image sensors such as cameras or photo diode arrays. However, according to further embodiments the data obtained by the image sensors may be supplemented with data from a variety of other sensors such as e.g. hygrometers, insertion temperature sensors, treatment chamber temperature sensors, acoustic sensors, laser, scales, and timers. Furthermore, a gas analyser of the gas inside the treatment chamber, means for determining temperature profiles of insertion temperature sensors, means for determining electromagnetic or acoustic process emissions of the food to be treated like light or sound being reflected or emitted in response to light or sound sources, means for determining results from 3D measurements of the food to be heated including 3D or stereo camera systems or radar, means for determining the type or constitution or pattern or optical characteristics or volume or the mass of the food to be treated can be also used as sensors for the sensor unit 1810 as described below. Automated food processing or baking may then be controlled based on all data from all sensors.

For example, referring back to Fig. 10, the treatment chamber 1020 may be further equipped with at least one temperature sensor or thermometer 1062. Although this is only illustrated within Fig. 10 any other embodiment described herein may also comprise such a tempreature sensor 1062. When treating food with heat, temperature information relates to process characteristics. It may contain information towards heat development over time and its distribution inside the treatment chamber. It may also gather information about the state of the oven, its heat treatment system and optional pre-heating.

It may also be advantageous to integrate insertion thermometers. Insertion thermometers enable to gather inside food temperature information that is critical to determine the food processing state. It is advantageous in bread baking to acquire information related to the inside and crumb temperature.

Moreover, a color change progress in time of the food to be heated may be used to determine an actual temperature within the oven chamber and may be further used for a respective temperature control in the baking process. The treatment chamber 1020 or any other embodiment described herein may be equipped with at least one sensor related to treatment chamber humidity such as a hygrometer 1064. In particular for bread baking gathering information related to humidity is advantageous. When the dough is heated the containing water evaporates resulting in a difference in inside treatment chamber humidity. For instance, with air circulation the treatment chamber humidity during a baking process may first rise and then fall indicating the food processing state.

The hygrometer 1064 or a sensor to measure humidity in gases as part of the sensor system may consist of a capacitive sensor ideally in combination with a thermometer 1062. Compared to other humidity sensors a capacitive sensor can operate at high temperatures such as 300°C that are present in ovens used for baking. Air has a different dielectric constant than water, which may be detected with a capacitive sensor. In combination with a temperature sensor 1062, such as a resistance thermometer or platinum measurement resistor, a capacitive sensor may be used to determine the relative humidity or dew point of gases. Such a sensor may be equipped with cooling elements such as a peltier element and or heating elements and or measurement chambers in which the gases is flowing through. The temperature sensor of the humidity sensor may as well be used to gather information about the temperature inside of the heat treatment chamber and become information source for the multi sensor system itself. The hygrometer sensor unit may be within the heat treatment chamber or part of the airflow system that is often present such as in convection ovens. The hygrometer sensor unit 1064 may also be within a vertical tube connected to the heat treatment chamber 1020 with two opening, one at top and one at bottom. Combined with a ventilation system the gas inside of the heat treatment chamber 1020 may be guided through this tube and thus support the measurement of humidity. The gas ventilation within this tube may be initiated by a fan or by heating the gas with a heating element at the bottom side of the tube. As warm air rises the ventilation within the vertical tube element may be initiated by the heating element and thus without moving parts.

The sensor system is combined with capacitive relative humidity sensors. Capacitive sensor structures are the most heat resisting. Thus the sensor system gathers visual information, humidity information, temperature information and time information. These multiple inputs are being used to control time, temperature and humidity individually. Time control is archived by comparing the current visual information with the learned reference baked. Actually the picture is not taken itself, the feature information is taken that represent change in color and contour as well as events such as the burst open of the crust due to the volume increase. Temperature control may be achieved by monitoring change in color only. If browning does not happen as in the reference bake, the temperature may be risen if less browning or lowered if too much browning is happening compared to the learned reference bake features. Finally the humidity may be kept equal to the reference bake information, thus is an independent control system, however acting together with the other controls. Same as air flow may be kept equal.

The treatment chamber 1020 or any other embodiment described herein may further be equipped with at least one sensor gathering information of the loaded food weight and eventually its distribution. This may be accomplished by integrating scales 1066 in a tray mounting system of the heat treatment chamber 1020. The tray mounting or stack mounting may be supported by rotatable wheels or discs easing the loading of the oven. The scales 1066 could be integrated with the wheels or discs and take them as transducer. It is advantageous to acquire the weight information for every used tray or set of trays individually in order to have information related about the total food weight and its relative distribution as the desired energy supply and its direction during the heat treatment may vary significantly. Further it is advantageous to acquire information of the food weight differences over time while treating it with heat. For instance in bread baking, the dough roughly loses around 10% of its initial weight. Further, it is possible to acquire information regarding the state of dough or food by emission and capturing of sound signals, e.g. by a loudspeaker and microphone 1068. Moreover, in the described embodiments alternative cameras or image sensors or photodiode array sensors and eventually alternative illumination setups may be used. Instead of placing the camera behind a window on any treatment chamber wall, it or a second camera may as well be integrated with the oven door or treatment chamber opening.

Instead of integrating illumination into any treatment chamber wall, it may as well be integrated into the oven door or treatment chamber opening. Commonly ovens door have windows to enable human operators to visually see the food treated and to supervise the process. According to another embodiment at least one camera or image sensor or photodiode array or any other imaging device may be integrated into an oven door or a treatment chamber opening. An oven door without window for human operators may be designed more energy efficient as heat isolation may be better. Further, differences in outside lightening do not influence with the treatment chamber monitoring camera images that would then only rely on the defined treatment chamber illumination. However, one should note that such a setup might not be easily installed later on an already existing oven.

Further, it may be advantageous to integrate a screen or digital visual display on the outside wall of the oven door or at any other place outside of the treatment chamber. This screen may show images captured from the treatment chamber monitoring camera. This enables a human operator to visually supervise the baking process, although it is an object of the invention to make this unnecessary.

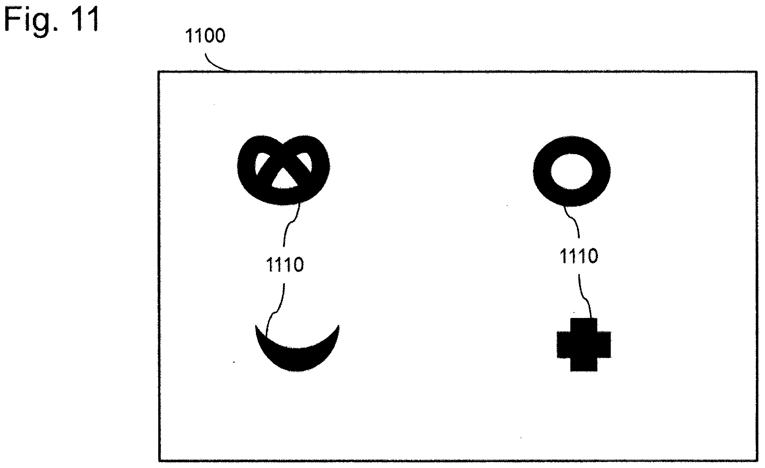

Further, it may be advantageous to use trays or a stack of trays that indicates the food distribution. For instance, in bread baking, when loading the oven the dough placement may vary for every baking cycle. These differences can be coped with by image processing with matching and recognition techniques. It is advantageous to have a similar loading or food placement for every production cycle as indicated in Fig. 11. An automated placement system may be applied when setting trays 1100. For manual placements at least some of the used trays may have indication 1110 of where to place the dough. As indication bumps, dumps, pans, molds, food icons, food drawings, or lines may be used.

Moreover, when integrating a camera sensor in an oven environment or a food processing system it may be of advantage to integrate cooling devices. These may be at least one cooling plate, at least one fan and/or at least one water cooling system.

Further, a shutter may be used, that only exposes the camera sensor when necessary. It may often not be necessary to take many pictures and it may often be feasible to only take pictures every 5 seconds or less. If the shutter only opens every 5 seconds the heat impact on the camera chip is significantly lower, which reduces the possibility of an error due to a heat impact and thus increases the reliability of the heat treatment monitoring system .

It may be further of advantage to take at least two pictures or more or take one exposure with several non-destructive read outs and combine the pixel values. Combining may be to take a mean or to calculate one picture out of at least two by means of High Dynamic Range Imaging. In combination with a shutter or stand alone it is possible to apply wavelength filters, that let only relevant wavelengths pass, for instance visible light or infrared radiation. This may further reduce the heat impact on the camera chip and hence increase the reliability of the monitoring system even further.

If retrofitting or integrating the sensor system to an existing heat treatment chamber 1020 or oven or proofer with its own controls and or control unit, it is of advantage to have an own control unit connected to the sensor unit that is adapted to communicate with the preexisting heat treatment chamber control unit. This has the advantage to have less work in retrofitting or to guarantee operation of the heat treatment chamber 1020 and its control unit if the control unit of the integrated sensor system is malfunctioning. Such communication can be designed to use existing protocols of the heat treatment monitoring system typically via Ethernet or USB port. This way it is possible to read and write information available in the heat treatment chamber control unit with the control unit of the sensor system and thus control the heat treatment chamber itself or provide quality analyses with combined information.

It is part of the invention to combine control of several heat treatment chambers such as a proofer and an oven and or combine this with information gathered while the food is waiting to be placed into a heat treatment chamber 1020 such as a proofer or an oven. For instance, while food is placed on a tray, a visual sensor may already recognize characteristics of the food on this tray consisting of type, quantity, color, texture and others. By means of a lookup table and the type of food the connected control system may pick the appropriate proofing or baking program and or preheat the heat treatment chamber 1020 accordingly. It may then either ask a user to place the food into the heat treatment chamber or initiate an automated placement process. Visual information gathered during the time the food is being observed outside of an heat treatment chamber 1020 or inside of the proofer may support the control unit to adjust the heat treatment chamber program such as the baking program such as adjusting the bake time or temperature.

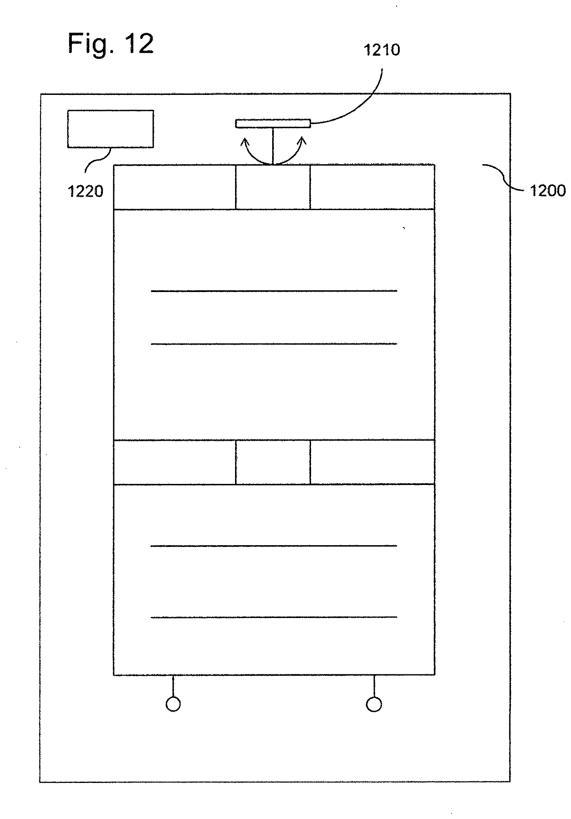

In another embodiment, illustrated in Fig. 12, a sensor system integration for oven racks or moving carts used in some oven designs may be used. For rotating rack ovens, the sensor system may be integrated into the oven rack as demonstrated with 1200. The sensor system is integrated above at least one of the food carrying trays. The sensor system in the cart may have at least one sensor of the following: hygrometer, insertion temperature sensor, treatment chamber temperature sensor, acoustic sensors, scales, timer, camera, image sensor, array of photodiodes. Part of the rack integrated sensor system is also supporting devices such as illumination or cooling as demonstrated in this invention. It further is object of the invention to have an electrical connection such as a wire or electrical plugs at the mounting of the rack as demonstrated with 1210. It is further advantageous to integrate at least part of the sensor system into the rotating rack oven wall as demonstrated with 1220. This is advantageous to reduce the heat effects onto the sensor system. For the camera, image sensor, or photodiode array it is advantageous to apply an image rotation or movement correction algorithm in order to correct the rack rotation or food movement. This algorithm may be supported by a measured or pre-set parameter from the oven control regarding the rotation or movement speed.

Loading and unloading a heat treatment machine is a common process in cooking and baking. This may be done by hand directly from the heat treatment machine. But for the purpose of saving time and efforts loading and unloading an heat treatment machine is often done with a removable rack system positioned in front of the heat treatment machine, such as a rack wagon with several trays of food positioned in front of an oven.

Processes on how to position and align such a rack wagon or rack structure so an automated loading and unloading of an oven can happen, are described, for example, in DE 10 2013 100 298 A1, or in US 7,183,521 B2.

According to an embodiment of the present invention, a rack structure is provided with at least one scale sensor that is taking the weight of at least one tray or the whole rack structure and to either use the gained information to store it in a database or to display the same on a screen.

In another embodiment of the present invention, the weight information of at least one tray or the whole rack structure is taken before loading and after unloading the heat treatment machine. Usually the weight at unloading is less than at loading due to water vaporization. In the case of baking rolls, a weight loss may be around 15 percent. The percentage of weight loss before and after the heating process is important information that may be used to provide feedback for a machine learning algorithm. If a classification algorithm such as a support vector machine or an artificial neural network is trained with data from the heating process for the percentage of weight loss in desired and undesired cases, it can then distinguish by itself if the current heating process had been a desired case or undesired case after determining the percentage of weight loss. If a monitoring system has recorded sensor data observing the food during the heating process, the percentage of weight loss may be used to label the sensor retroactively. The above described machine learning process can be performed by means of a monitoring apparatus as described in all detail with regard to Fig. 18, wherein the classification unit 1850 can act as a support vector machine or as an artificial neural network.

Still another embodiment is related to a rack of bread and a monitoring system, in particular a monitoring system for detecting presence and kind of food to be heated like bread, dough or the like. In a bakery, a retail store, restaurant buffet bread is often presented within a rack system with at least one compartment. In each compartment may be a different kind of food or bread.

According to the present invention, a bread rack is provided with a scale or a camera or an array of photodiodes or a lighting device or a combination of the same. In another embodiment of this invention the information of weight or food kind is used to determine if a heat treatment machine shall be loaded. In another embodiment of the present invention, the information of weight or kind of food is used to be displayed at the location of the rack of bread or at an oven or at a remote location using information technology.

In another embodiment a graphical user interface (GUI) may show pictures of every tray and deck within an oven. In a convection oven the end time for every tray may be determined seperately. This means that if one tray is finished earlier than another, the user may get a signal to empty this tray and leave the others in. This is advantageous because many ovens may not have equal results for different trays. Moreover, one may bake different products on each tray, if they have approximately the same baking temperature. Hence, it is possible to operate a single oven more flexible and efficient.

In another embodiment the oven may also determine the distribution of the baked goods on a tray. An oven may also reject poorly loaded trays.

Using one or several of the sensors described above data about the baking or food processing procedure may be collected. In order to allow for an efficient and reliable automated baking or food processing the processing machines such as ovens or belt conveyors need to learn how to extract relevant data from all data, how to classify the processed food and the stage of food processing based on these data, and how to automatically control the processing based on the data and the classification. This may be achieved by a heat treatment monitoring system that is able to control a baking process based on machine learning techniques.

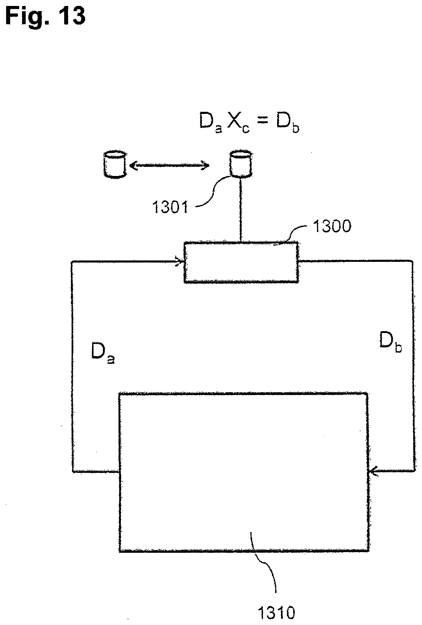

Fig. 13 demonstrates a control unit and a data processing diagram according to which the data of any of the aforementioned embodiments may be handled.

Here, the control unit or heat treatment monitoring system 1300, for the heat treatment machine 1310, recognizes the food to be processed with any of the described sensor systems. The recognition of the food to be processed may be accomplished with the unique sensor data input matrix $D_a$. This sensor data input matrix or a reduced representation of it can be used to identify a food treatment process with its data characteristic or data fingerprint.

The control unit 1300 has access to a database that enables to compare the sensor data input matrix with previously stored information, indicated with 1301. This enables the control unit 1300 to choose a control program or processing procedure for the present food treatment. Part of this procedure is according to an embodiment a mapping $X_c$ of the sensor data input matrix $D_a$ to an actuator control data matrix $D_b$,

$$D_a X_c = D_b .$$   (Formula 1.00)

With the actuator control data matrix $D_b$ the heat treatment machine 1310 controls the food processing, for instance by controlling oven control parameters such as energy supply or start and end time of processing. The heat treatment machine then operates in a closed-loop control mode. Typically, the sensor data input matrix $D_a$ is significantly higher in dimension compared to the actuator control data matrix $D_b$.

According to an embodiment it is advantageous to find a mapping $X_c$ as well as a reduced representation of the sensor data input matrix $D_a$ with methods known from machine learning. This is because the type of food to be processed and the according procedures are usually individually different.

From a data processing point of view the relations between sensor data input and appropriate actuator output may be highly non-linear and time dependent. Today these parameters are chosen by human operators commonly with significant know how in a time consuming configuration of the heat treatment machine. According to an embodiment of the present invention with initial data sets learned from a human operator, machine learning methods can perform the future system configuration and expedite configuration times as well as increase processing efficiency as well as quality.

All applied data may be stored in databases. According to the invention it is beneficial to connect the heat treatment machine with a network. With the means of this network, any database data may be exchanged. This enables a human operator to interact with several locally distributed heat treatment machines. In order to do so the heat treatment machine has equipment to interact with a network and use certain protocols such as Transmission Control Protocol (TCP) and Inter-net Protocol (IP). According to the invention the heat treatment machine can be equipped with network devices for a local area network (LAN) a wireless area network (WLAN) or a mobile network access used in mobile telecommunication.

In any of the previously described embodiment a baking or food processing procedure may contain a learning phase and a production phase. In the learning phase a human operator puts food into the heat treatment machine. It is treated with heat as desired by the human operator. This can be carried out with and without pre-heating of the heat treatment chamber. After the processing with heat the human operator may specify the type of food and when the desired process state has been reached. The human operator can also provide information when the product was under baked, over baked and at desired process state.

Using the described machine learning methods the machine calculates the processing parameters for future food production. Then the heat treatment machine or heat treatment machines in a connected network can be used to have additional learning phases or go into automated production. When in automated production the human operator just puts the food into the heat treatment machine with optional pre-heating. The machine then detects the food in the treatment chamber and performs the previously learned heat treatment procedure.

When the desired food process state has been reached or simply, when the bread is done, the machine ends the heat treatment process. It can do so by opening the door or end the energy supply or ventilate the hot air out of the treatment chamber. It can also give the human operator a visual or acoustical signal. Further, the heat treatment machine may ask for feedback from the human operator. It may ask to pick a category such as under baked, good, or over baked. An automated loading system that loads and unloads the treatment chamber may fully automate the procedure. For this purpose a robotic arm or a convection belt may be used. Recent techniques in machine learning and the control of food processing have been examined to create adaptive monitoring. Artificial Neural Networks (ANN), Support Vector Machines (SVM), and the Fuzzy K-Nearest Neighbor (KNN) classification have been investigated as they apply to special applications for food processing. One aim of the present invention is to evaluate what machine learning can accomplish without a process model defined by a human operator.

In the following, a brief overview of the theories underlying the present invention is given. This includes techniques for reducing sensor data with dimensionality reduction, such as Principal Component Analysis, Linear Discriminant Analysis, and Isometric Feature Mapping. It also includes an introduction of classification and supervised as well as unsupervised learning methods such as Fuzzy K-Nearest Neighbor, Artificial Neural Networks, Support Vector Machines, and reinforcement learning. For the number format, the thousand separator is a comma "," and the decimal separator is a point "."; thus, one-thousand is represented by the number 1,000.00.

Feature extraction and dimensionality reduction

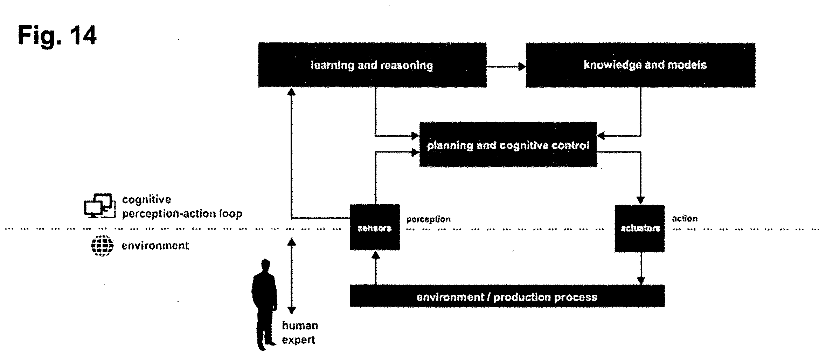

The present invention does not seek nor desire to achieve human-like behavior in machines. However, the investigation of something like cognitive capabilities within food processing or production machines of artificial agents capable of managing food processing tasks may provide an application scenario for some of the most sophisticated approaches towards cognitive architectures. Approaches for production machines may be structured within a cognitive perception-action loop architecture, as shown in Fig. 14, which also defines cognitive technical systems. Cognitive capabilities such as perception, learning, and gaining knowledge allow a machine to interact with an environment autonomously through sensors and actuators. Therefore, in the following, some methods known from machine learning that will be suitable for different parts of a cognitive perception-action loop working in a production system will be discussed.

If a cognitive technical system simply has a feature representation of its sensor data input, it may be able to handle a higher volume of data. Moreover, extracting features emphasizes or increases the signal-to-noise ratio by focusing on the more relevant information of a data set. However, there are many ways of extracting relevant features from a data set, the theoretical aspects of which are summarized in the following.

In order to select or learn features in a cognitive way, we want to have a method that can be applied completely autonomously, with no need for human supervision. One way of achieving this is to use dimensionality reduction (DR), where a data set $X$ of size $t{\times}n$ is mapped onto a lower dimension data set $Y$ of size $t{\times}p$ . In this context $R^n$ is referred to as observation space and $R^p$ as feature space. The idea is to identify or learn a higher dimensional manifold in a specific data set by creating a representation with a lower dimension.

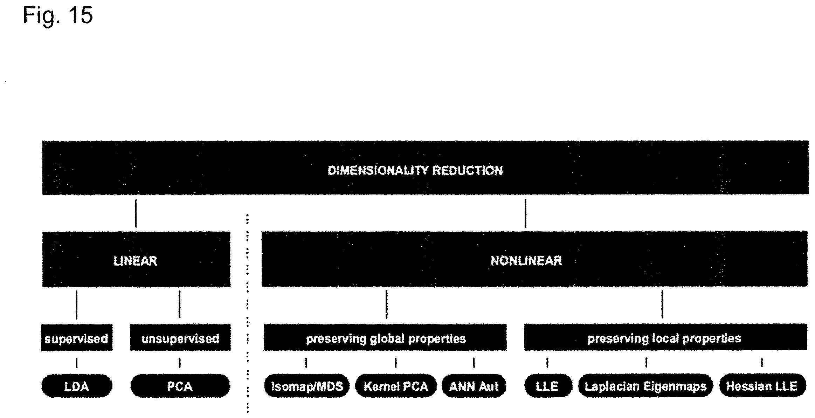

Methods used to find features in a data set may be subdivided into two groups, linear and nonlinear, as shown in Fig. 15. Linear dimensionality reduction techniques seem to be outperformed by nonlinear dimensionality reduction when the data set has a nonlinear structure. This comes with the cost that nonlinear techniques generally have longer execution times than linear techniques do. Furthermore, in contrast to nonlinear methods linear techniques allow a straightforward approach of mapping back and forth. The question is whether a linear dimensionality reduction technique is sufficient for food processing, or if nonlinear techniques bring more advantages than costs. The following nonlinear techniques are very advantageous for artificial data sets: Hessian LLE, Laplacian Eigenmaps, Locally Linear Embedding (LLE), Multilayer Autoencoders (ANN Aut), Kernel PCA, Multidimensional Scaling (MDS), Isometric Feature Mapping (Isomap), and others. As a result Isomap proves to be one the best tested algorithms for artificial data sets. We find that the Isomap algorithm seems to be the most applicable nonlinear dimensionality reduction technique for food processing. Therefore Isomap and two linear dimensionality reduction techniques are introduced below.

Principal Component Analysis

Principal Component Analysis (PCA) enables the discovery of features that separate a data set by variance. It identifies an independent set of features that represents as much variance as possible from a data set, but are lower in dimension. PCA is known in other disciplines as the Karhunen-Loève transform and the part referred as Singular Value Decomposition (SVD) is also a well-known name. It is frequently used in statistical pattern or face recognition. In a nutshell, it computes the dominant eigenvectors and eigenvalues of the covariance of a data set. We want to find a lower-dimensional representation $Y$ with $t{\times}p$ elements of a high-dimensional data set $t{\times}n$ mean adjusted matrix $X$, maintaining as much variance as possible and with decorrelated columns in order to compute a low-dimensional data representation $y_i$ for the data set $x_i$. Therefore PCA seeks a linear mapping $M_{PCA}$ of size $n{\times}p$ that maximizes the term

$$\mathrm{tr}(M_{\mathrm{PCA}}^{T}\,\mathrm{cov}(X)M_{\mathrm{PCA}})$$ , with $M_{\mathrm{PCA}}^{T}M_{\mathrm{PCA}} = I_p$ and cov($X$) as the covariance matrix of $X$. By solving the eigenproblem with

$$\mathrm{cov}(X)M_{\mathrm{PCA}} = M_{\mathrm{PCA}}\Lambda ,\qquad \mathrm{(Formula\ 2.3)}$$

we obtain the $p$ ordered principal eigenvalues with the diagonal matrix given by $\Lambda = diag(\lambda_1,...\lambda_p)$. The desired projection is given by

$$Y = X M_{PCA} ,\qquad \mathrm{(Formula\ 2.4)}$$

gives us the desired projection onto the linear basis $M_{PCA}$. It can be shown that the eigenvectors or principal components (PCs) that represent the variance within the high-dimensional data representation are given by the $p$ first columns of the matrix $M_{PCA}$ sorted by variance. The value of $p$ is determined by analysis of the residual variance reflecting the loss of information due to dimensionality reduction.

By finding an orthogonal linear combination of the variables with the largest variance, PCA reduces the dimension of the data. PCA is a very powerful tool for analyzing data sets. However, it may not always find the best lower-dimensional representation, especially if the original data set has a nonlinear structure.

Linear Discriminant Analysis

Despite the usefulness of the PCA, the Linear Discriminant Analysis (LDA) may be seen as a supervised dimensionality reduction technique. It can be categorized as using a linear method, because it also gives a linear mapping $M_{LDA}$ for a data set $X$ to a lower-dimension matrix $Y$, as stated for $M_{PCA}$ in equation 2.4. The necessary supervision is a disadvantage if the underlying desire is to create a completely autonomous system. However, LDA supports an understanding of the nature of the sensor data because it can create features that represent a desired test data set.

Because the details of LDA and Fisher's discriminant are known, the following is a brief simplified overview. Assume we have the zero mean data $X$. A supervision process provides the class information to divide $X$ into $C$ classes with zero mean data $X_c$ for class $c$. We can compute this with

$$S_w = \sum_{c=1}^{C} \mathrm{cov}(X_c) \qquad \text{(Formula 2.5)}$$

the within-class scatter $S_w$, a measure for the variance of class c data to its own mean. The between-class scatter $S_b$ follows

$$S_b = \mathrm{cov}(X) - S_w . \qquad \text{(Formula 2.6)}$$

Between-class scatter is a measure of the variance of each class relative to the means of the other classes. We obtain the linear mapping $M_{LDA}$ by optimizing the ratio of the between-class and within-class scatter in the low-dimensional representation using the Fisher criterion,

$$J(M) = \frac{M^T S_b M}{M^T S_w M} . \qquad \text{(Formula 2.7)}$$

Maximizing the Fisher criterion by solving the eigenproblem for $S_w^{-1} S_b$ provides $C - 1$ eigenvalues that are non-zero. Therefore, this procedure seeks the optimal features to separate the given classes in a subspace with linear projections.

LDA thus separates a low-dimensional representation with a maximized ratio of the variance between the classes to the variance within the classes.

Isometric Feature Mapping

The PCA and LDA methods produce linear mapping from a high-dimensional data set to a low-dimensional representation. This may be expressed as learning a manifold in an observation space and finding a representation for this in a lower-dimensional feature space. For data sets with a nonlinear structure, such as the artificial Swiss-roll data set, linear projections will lose the nonlinear character of the original manifold. Linear projections are not able to reduce the dimension in a concise way: data points in the feature space may appear nearby although they were not in the observation space. In order to address this problem, nonlinear dimensionality reduction techniques have recently been proposed relative to the linear techniques. However, it is a priori unclear whether nonlinear techniques will in fact outperform established linear techniques such as PCA and LDA for data from food processing sensor systems.

Isometric Feature Mapping or the Isomap algorithm attempts to preserve the pairwise geodesic or curvilinear distances between the data points in the observation space. In contrast to a Euclidean distance, which is the ordinary or direct distance between two points that can be measured with a ruler or the Pythagorean theorem, the geodesic distance is the distance between two points measured over the manifold in an observation space. In other words, we do not take the shortest path, but have to use neighboring data points as hubs to hop in between the data points. The geodesic distance of the data points $x_i$ in observation space may be estimated by constructing a neighborhood graph $N$ that connects the data point with its $K$ nearest neighbors in the data set $X$. A pairwise geodesic distance matrix may be constructed with the Dijkstra's shortest path algorithm. In order to reduce the dimensions and obtain a data set $Y$, multidimensional scaling (MDS) may be applied to the pairwise geodesic distance matrix. MDS seeks to retain the pairwise distances between the data points as much as possible. The first step is applying a stress function, such as the raw stress function given by

$$\Phi(Y) = \sum_{ij} \left( \left\| \mathbf{x}_i - \mathbf{x}_j \right\| - \left\| \mathbf{y}_i - \mathbf{y}_j \right\| \right)^2 \qquad , \qquad \text{(Formula 2.8)}$$

in order to gain a measure for the quality or the error between the pairwise distances in the feature and observation spaces. Here, $\|\mathbf{x}_i\text{-}\mathbf{x}_j\|$ is the Euclidean distance of the data points $\mathbf{x}_i$ and $\mathbf{x}_j$ in the observation space with $\mathbf{y}_i$ and $\mathbf{y}_j$ being the same for the feature space. The stress function can be minimized by solving the eigenproblem of the pairwise distance matrix.

The Isomap algorithm thus reduces the dimension by retaining the pairwise geodesic distance between the data points as much as possible.

Classification for machine learning

In machine learning, it is not only the extraction of features that is of great scientific interest, but also the necessity of taking decisions and judging situations. Classification techniques may help a machine to differentiate between complicated situations, such as those found in food processing. Therefore classifiers use so-called classes that segment the existing data. These classes can be learned from a certain training data set. In the ongoing research into AI and cognitive machines, Artificial Neural Networks were developed relatively early in the process. In comparison, the concepts of Kernel Machines and reinforcement learning appeared only recently but showed increased cognitive capabilities.

Artificial Neural Networks

Artificial Neural Networks (ANN) have been discussed extensively for decades. ANN was one of the first successes in the history of Artificial Intelligence. Using natural brains as models, several artificial neurons are connected in a network topology in such a way that an ANN can learn to approximate functions such as pattern recognition. The model allows a neuron to activate its output if a certain threshold is reached or exceeded. This may be modeled using a threshold function. Natural neurons seem to "fire" with a binary threshold. However, it is also possible to use a sigmoid function,

$$f(x) = \frac{1}{1 + e^{-vx}} \qquad , \qquad \text{(Formula 2.9)}$$

with $v$ as parameter of the transition. For every input connection, an adjustable weight factor $w_i$ is defined, which enables the ANN to realize the so-called learning paradigm. A threshold function $o$ can be expressed using the weight factors $W$ and the outputs from the preceding neurons $P$, $o = W^T P$, with a matrix-vector notation. The neurons can be layered in a feedforward structure, Multi-Layer Perceptron (MLP) or, for example, with infinite input response achieved using feedback loops with a delay element in so-called Recurrent Neural Networks. A MLP is a feedforward network with a layered structure; several hidden layers can be added if necessary to solve nonlinear problems. The MLP can be used with continuous threshold functions such as the sigmoid function in order to support the back-propagation algorithm stated below for supervised learning. This attempts to minimize the error E in

$$E = \frac{1}{2} \sum_i (z_i - a_i)^2 \qquad , \qquad \text{(Formula 2.10)}$$

from the current output $a_i$ of the designated output $z_i$, where the particular weights are adjusted recursively. For an MLP with one hidden layer, if $h_j$ are hidden layer values, $e_i$ are input values, $\alpha \geq 0$ is the learn rate, and $\varepsilon_i = z_i - a_i$, then the weights of the hidden layer $w_{ij}^1$ and the input layer $w_{ij}^2$ are adjusted according to,

$$\Delta w_{ij}^1 = \alpha \varepsilon_i h_j \qquad \text{(Formula 2.11)}$$

$$\Delta w_{ij}^2 = \alpha \sum_m e_m w_{mi}^1 e_j \qquad \text{(Formula 2.12)}$$

The layers are enumerated starting from the input to the output. For backpropa-gation, the weights are adjusted for the corresponding output vectors until the overall error cannot be further reduced. Finally, for a classification of $C$ classes, the output layer can consist of either $C$ output neurons, representing the probability of the respective class, or a single output neuron that has defined ranges for each class.

ANN can thus learn from or adapt to a training data set and can find a linear or a nonlinear function from $N$ input neurons to $C$ output neurons. This may be used for classification to differentiate a set of classes in a data set.

Kernel machines

In general, a classification technique should serve the purpose of determining the probability of learned classes occurring based on the measured data. Classification can be mathematically formulated as a set of classes $c_i = c_1,..., c_N$ in $C$, with a data set represented by $x_i \in R^n$ and a probability of $p_i$,

$$p_i = p(c_i|\mathbf{x}_i) = f_c(\mathbf{x}_i,\theta) \qquad \text{(Formula 2.13)}$$

The parameter $\theta$ may then be chosen separately for every classification or can be learned from a training data set.

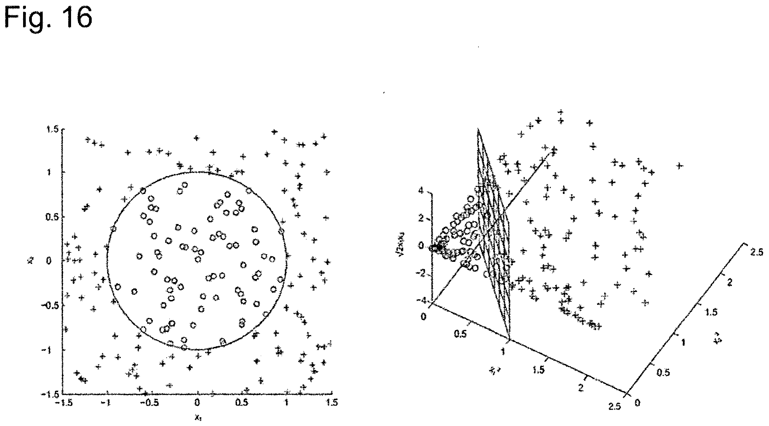

In order to achieve learning, it is desirable to facilitate efficient training algorithms and represent complicated nonlinear functions. Kernel machines or Support Vector Machines (SVM) can help with both goals. A simple explanation of SVM, or in this particular context Support Vector Classification (SVC), is as follows: in order to differentiate between two classes, good and bad, we need to draw a line and point out which is which; since an item cannot be both, a binary decision is necessary, $c_i \in \{-1,1\}$. If we can only find a nonlinear separator for the two classes in low-dimensional space, we can find a linear representation for it in a higher-dimensional space, a hyperplane. In other words, if a linear separator is not possible in the actual space, an increase of dimension allows linear separation. For instance, we can map with function F a two-dimensional space $f_1 = x_1$, $f_2 = x_2$ with a circular separator to a three-dimensional space $f_I = x_1^2, f_{II} = x_2^2, f_{III} = \sqrt{2}x_1 x_2$ using a linear separator, as illustrated in Fig. 16. SVC seeks for this case an optimal linear separator, a hyperplane,

$$H = \{x \in \mathbb{R}^3 | \mathbf{o}x + b = 0\} \qquad \text{(Formula 2.14)}$$

in the corresponding high-dimensional space for a set of classes $c_i$. In three-dimensional space, these can be separated with a hyperplane, $H$, where o is a normal vector of $H$, a perpendicular distance to the origin $|b|/\|o\|$, and $\mathbf{o}$ with an Euclidean norm of $\|\mathbf{o}\|$. In order to find the hyperplane that serves as an optimal linear separator, SVC maximizes the margin given by,

$$d(\mathbf{o},\mathbf{x}_i;b) = \frac{|\mathbf{o}\mathbf{x}_i + b|}{\|\mathbf{o}\|} \qquad \text{(Formula 2.15)}$$

between the hyperplane and the closest data points $\mathbf{x}_i$. This may be achieved by minimizing the ratio $\|\mathbf{o}\|^2/2$ and solving with the optimal Lagrange multiplier parameter $\alpha_i$. In order to do this, the expression,

$$\sum_{i=1}^{l} \alpha_i + \frac{1}{2} \sum_{j=1}^{l} \sum_{k=1}^{l} \alpha_i \alpha_j c_i c_j (\mathbf{x}_i \cdot \mathbf{x}_j)$$ , (Formula 2.16)

has to be maximized under the constraints $\alpha_i \geq 0$ and $\sum_i \alpha_i c_i = 0$. The optimal linear separator for an unbiased hyperplane is then given using,

$$f(\mathbf{x}) = sign\left( \sum_i \alpha_i c_i (\mathbf{x} \cdot \mathbf{x}_i) \right)$$ , (Formula 2.17)

allowing a two-class classification.

SVM has two important properties: it is efficient in computational runtime and can be demonstrated with equations 2.16 and 2.17. First, the so-called support vectors or set of parameters $\alpha_i$ associated with each data point is zero, except for the points closest to the separator. The effective number of parameters defining the hyperplane is usually much less than $l$, increasing computational performance. Second, the data enter expression 2.16 only in the form of dot products of pairs of points. This allows the opportunity of applying the so-called kernel trick with

$$\mathbf{x}_i \cdot \mathbf{x}_j \mapsto F(\mathbf{x}_i) \cdot F(\mathbf{x}_j) = K(\mathbf{x}_i, \mathbf{x}_j)$$ , (Formula 2.18)

which often allows us to compute $F(\mathbf{x}_i) \cdot F(\mathbf{x}_j)$ without the need of knowing explicitly F . The kernel function $K(\mathbf{x}_i, \mathbf{x}_j)$ allows calculation of the dot product to the pairs of input data in the corresponding feature space directly. However, the kernel function applied throughout the present invention is the Gaussian Radial Basis Function and has to fulfill certain conditions, as in

$$K_G(\mathbf{x}_i, \mathbf{x}_j) = e^{-\gamma \|\mathbf{x}_i - \mathbf{x}_j\|^2}$$ , (Formula 2.19)

with $\gamma$ as the adjustable kernel parameter.

Because we have so far discussed only binary decisions between two classes, we note here that it is also possible to enable soft and multi-class decisions. The latter can be achieved in steps by a pairwise coupling of each class $c_i$ against the remaining $n$ - 1 classes.

SVC can thus be used to learn complicated data. It structures this data in a set of classes in a timely fashion. Mapping into a higher-dimensional space and finding the optimal linear separator enables SVM to use efficient computational techniques such as support vectors and the kernel trick.

Fuzzy K-Nearest Neighbor

Unlike the previously discussed Support Vector Machines, a less complicated but highly efficient algorithm called the Fuzzy K-Nearest Neighbor (KNN) classifier can also separate classes within data. The algorithm can categorize unknown data by calculating the distance to a set of nearest neighbors.

Assume we have a set of $n$ labeled samples with membership in a known group of classes. If a new sample x arrives, it is possible to calculate membership probability $p_i(x)$ for a certain class with the vector's distance to the members of the existing classes. If the probability of membership in class A is 90 % compared to class B with 6 % and C with just 4 %, the best results seem to be apparent. In contrast, if the probability for membership in class A is 45 % and 43 % for class B, it is no longer obvious. Therefore KNN provides the membership information as a function to the K nearest neighbors and their membership in the possible classes. This may be summarized with

$$p_i(\mathbf{x}) = \frac{\sum_{j}^{K} p_{ij}\left(\dfrac{1}{\left\|\mathbf{x} - \mathbf{x}_j\right\|^{\frac{2}{m-1}}}\right)}{\sum_{j}^{K} \dfrac{1}{\left\|\mathbf{x} - \mathbf{x}_j\right\|^{\frac{2}{m-1}}}},$$

(Formula 2.20)

where $p_{ij}$ is the membership probability in the $i$th class of the $j$th vector within the labeled sample set. The variable $m$ is a weight for the distance and its influence in contributing to the calculated membership value.

When applied, we often set $m = 2$ and the number of nearest neighbors $K = 20$.

Cognitive technical architecture

An artificial agent is anything that perceives its environment through sensors and acts in consequence of this through actuators. An agent is defined as an architecture with a program. The inspirational role model for this is natural cognition, and we want to realize a similar acting cognition for technical systems. Therefore, the agent will be equipped with cognitive capabilities, such as abstracting information, learning, and decision making for a manufacturing workstation. As part of the process, this section introduces an architecture that creates and enables agents to manage production tasks. In order to do so, the agents follow a cognitive perception-action loop, by reading data from sensors and defining actions for actuators.

A natural cognitive capability is the capacity to abstract relevant information from a greater set of data and to differentiate between categories within this information. Transferring this concept from natural cognition to the world of mathematical data analysis, a combination of data reduction techniques and classification methods is used according to the present invention to achieve something that exhibits similar behavior. In industrial production, many manufacturing processes can be carried out using a black box model, focusing on the ins and outs of the box rather on than what actually happens inside. The connections to the black box that may be used in production systems are generally sensors and actuators. Sensors such as cameras, microphones, tactile sensors, and others monitor the production processes. These systems also need actuators, such as linear drives or robotic positioning, in order to interact with its environment. For every production process, these actuators have to be parameterized. In order to learn how an agent can adaptively control at least one parameter of these production systems, many combinations of self-learning algorithms, classification techniques, knowledge repositories, feature extraction methods, dimensionality reduction techniques, and manifold learning techniques could be used. The present invention provides also different controlling techniques, both open-and closed-loop, using multiple different sensors and actuators. After many simulations and experiments, a simple architecture that demonstrates how these techniques may be combined proved to be successful and reliable, at least for food processing. However, the food processes may be interpreted as a form of black box, and may thus be applicable to other types of production processes.

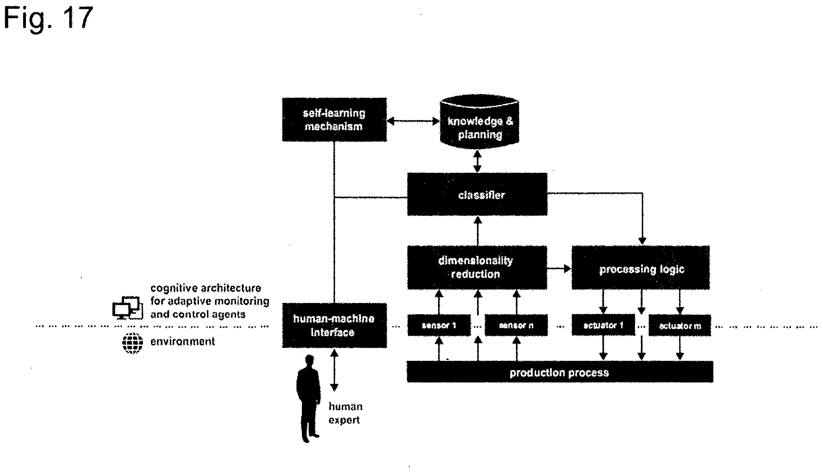

Fig. 17 illustrates a cognitive architecture that may be suitable for designing agents that can provide monitoring or adaptive process control for production tasks. The diagram describes the unit communication and information processing steps. Natural cognition seems to abstract information firstly by identifying representative symbolism, such as structured signals. A similar process can be accomplished using dimensionality reduction (DR), in which the agent uses a low-dimensional representation of the incoming sensor data. Natural cognition then recognizes whether or not knowledge about the incoming sensational events is already present. This step may be achieved by using classification techniques that categorize "sensorial" events or characteristics. A natural subject may decide to learn or to plan new actions. In order to replicate this, the architecture of the present invention offers self-learning techniques that feeds a processing logic. In seeking to achieve quick reactions without the need to start a complex decision-making process, we may also "hard-wire" a sensor input that can directly initiate an actuator in using a closed-loop control design. Therefore, the architecture of the present invention may be designed in respect to four modes of usage, which will be discussed individually in the following: first, abstracting relevant information; second, receiving feedback from a human expert on how to monitor and control processes, or supervised learning; third, acting on learned knowledge; and fourth, autonomously controlling processes in previously unknown situations.

As with other cognitive architectures the aim here is creating agents with some kind of artificial intelligence or cognitive capabilities related to humans.

The agents may be composed of several components from different dimensionality reduction and classification techniques, which allow us to compare the performance of composed agents and modules in terms of overall food processing quality. Many different dimensionality reduction and classification techniques may be applicable, and some of these have been evaluated in the research project. The cognitive architecture of the present invention offers the following modules for composing agents: Principal Component Analysis (PCA), Linear Discriminant Analysis (LDA), Isometric Feature Mapping (Isomap), Support Vector Machines (SVM), Fuzzy K-Nearest Neighbors (KNN), Artificial Neural Networks (ANN), and reinforcement learning (RL), along with some other methods. Three embodiments of the present invention of control agents within this architecture would be agent A connecting Isomap, SVM, ANN, and PID energy supply control, or agent B connecting Isomap, SVM, and PID energy supply control, or agent C connecting ANN and Fuzzy KNN, for control.

Abstract relevant information

In natural human cognition, we abstract or absorb information from everything that we hear, feel, and see. Therefore, we only generally remember the most interesting things. Inspired by this, a technical cognitive system should similarly abstract relevant information from a production process. Working with abstracted features rather than with raw sensor data has certain advantages. Many weak sensor signals may be reduced in dimension to fewer but better signals, resulting in a more reliable feature. Additionally, in order to realize real-time process control, it is necessary to reduce the volume of the incoming sensor data because a greater amount of data may have a significant influence in causing longer execution times for the entire system.

The architecture of the present invention requires a test run in order to abstract initial information. During this period of agent training, the parameter range of the actuator that will be controlled is altered. In order to determine which information is most relevant, the agent should explore its own range of actions. After the initial reference test, the system analyzes the recorded sensor data in order to discover representative features. The agent may solve feature calculations separately for different kinds of sensors, but the sensory units should ideally be trained to map the sensory input into the learned feature space. Finding a useful representation of the feature space is critical because the system will only be able to recognize or react to changes in the feature values. The purpose of the cognitive processing of the present invention is to provide as much information as possible for the subsequent processing steps. However, the raw sensor data contains repetitions, correlations, and interdependencies that may be neglected. Therefore, in order to abstract the relevant information, the most significant features, or those that contain the most information, should be identified. In order to do this "cogni-tively", an agent should perform this task without the necessary supervision of a human expert. Therefore, a method of feature extraction is chosen that can be applied to all of the different kinds of processing tasks and the corresponding sensor data without the need to change parameterization or re-configuration. Manifold learning or dimensionality reduction techniques satisfy this need. They can reduce a sensor data set $X$ of dimension $n$ in observation space to a data set $Y$ of dimension $p$ in feature space. Often, the new quantity $p$ is much less than $n$. However, many linear and nonlinear dimensionality reduction techniques have been tried and tested for different purposes. The present invention provides a suitable feature extraction technique for production workstations, complying with the following requirements the feature extraction method works transparently and is able to display the processing steps to the user. The feature extraction method is able to run unsupervised. The feature extraction method is executable within a reasonable time-frame for configuration, especially during processing. The extracted features contain enough process information for reliable classification within several food loads.

In essence, PCA seeks orthogonal linear combinations that represent a greater data set. These may be calculated for incoming sensor data vectors. These eigenvectors may serve as features for classification up to a threshold d. Feature extraction combined with classification may be achieved using Linear Discriminant Analysis. Analyzing the same data set using LDA and three learned quality classes defined as "good", "medium", and "bad" provides another set of features. Feature extraction may also be achieved using the Isomap algorithm. Unfortunately, the nonlinear feature cannot be displayed in the same way as the linear feature extraction of LDA and PCA. The extracted features of the methods named above are compared in the following. The LDA feature seems to contain more details than any one of the PCA features. Using this method of calculating, the LDA features seem to contain more process information in fewer features than PCA because they are especially designed to separate the desired classes. Furthermore, it is possible to display the calculated features using PCA and LDA in a way that makes these two methods more transparent than Isomap. The user gets an idea of what a process looked like if a feature is identified in a process video simply by looking at it. PCA and Isomap have the advantage that they can run unsupervised, which is not possible with LDA. Therefore, LDA merely serves as a comparison to PCA, but is not considered as an alternative for the desired architecture. Furthermore, the LDA feature seems to be very individualized for a particular process. Isomap has considerably higher execution times for analysis and out-of-sample extension. Therefore, if classification with PCA achieves sufficient results, then it is more applicable to the system under research. Therefore, the method of choice would be PCA, unless Isomap shows a significantly better performance toward the first object of the present invention. We have to postpone the final choice of dimensionality reduction techniques because the most important quality measures are the experimental results, which are the basis of the present invention.

In essence, dimensionality reduction may allow agents to abstract relevant information in terms of detecting variances and similarities during a training trial. This helps the agent to process only a few feature values compared to the significantly higher volume of raw sensor data. Furthermore, dimensionality reduction may support the perception of similarities in unknown situations, for instance similar food processing characteristics such as food size and form, even if these have not been part of the training. This may improve the adaptability of the agents to unknown but similar situations.

Supervised learning from human experts

In natural human cognition, for instance in childhood, we often learn from others how to manage complex tasks. Similarly, a machine should have the possibility of learning its task initially from a human expert. Supervised learning seems to be the most efficient way of setting up a cognitive agent for production. In industrial production, a qualified human supervisor is usually present when the production system is being installed or configured. The architecture that we are examining uses human-machine communication in order to receive feedback from an expert, for instance through an intuitive graphical user interface on a touch-screen tablet computer. As mentioned above, at least one test action per actuator or test run is needed in this architecture as an initial learning phase. During these tests, the agent executes one actuator from within the desired range of actions, and the sensor data input is stored. After this run, an expert provides feedback concerning whether the robot has executed the actuator correctly, or if the action was unsuccessful or undesirable. The feedback may come in many different categories so that different kinds of failures and exit strategies may be defined. A classification technique may then collect the features together with the corresponding supervisory feedback. Combined with lookup tables, the classifier module will serve as knowledge and as a planning repository for a classification of the current system state. How an agent may perform its own actions and give itself feedback will be of importance for the next section; this section mainly covers the cognitive capability of learning from a human expert, and the application of this knowledge for monitoring purposes.

Support Vector Machines, Fuzzy K-Nearest Neighbor, and Artificial Neural Networks as classification techniques have been discussed. The more that the human expert teaches the machine, the likelier it is that the system will achieve the desired goal. In order to save costs, the necessary human supervisor time should be minimized to just one or two reference tests, if possible.

As already mentioned above the previously discussed machine learning techniques may be implemented in any herein described embodiment of a heat treatment monitoring system.

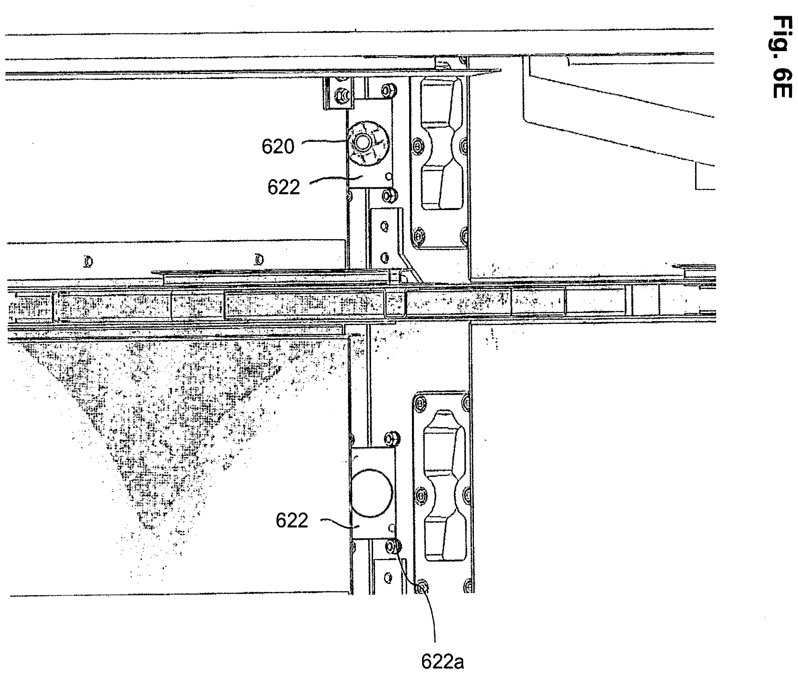

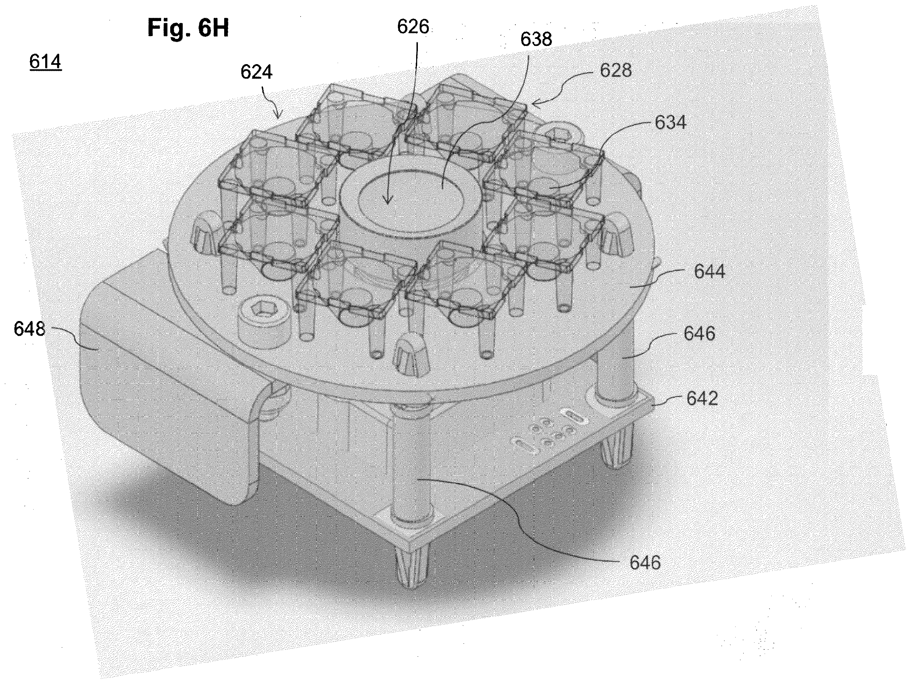

In the following, an embodiment of a heat treatment monitoring system 100 illustrated in Fig. 18A and 18B will be described. The heat treatment monitoring system comprises an oven 100 and a monitoring apparatus 150 as described above with regard to Fig. 1A and 1B. The embodiment as described with regard to Fig. 18A should, however, not be restricted to the usage of the window 130 as described above, thus any kind of window 1800 adapted to permit the camera 160 to observe the food to be heated may be used. The embodiment of the monitoring apparatus 150 should further not be restricted to the employment within the embodiment of Fig. 1A and 1B, but may be further employed within heat treatment systems 600, 700 and 800 as described with regard to Fig. 6 to 10 or in any other embodiment as described above.

A block diagram of an embodiment of the monitoring apparatus 150 is shown in Fig. 18B. The monitoring apparatus 150 and the monitoring system 100, accordingly, comprises a sensor unit 1810 having at least one sensor 1815 to determine current sensor data of food being heated, a processing unit 1820 to determine current feature data from the current sensor data, and a monitoring unit 1830 adapted to determine a current heating process state in a current heating process of monitored food by comparing the current feature data with reference feature data of a reference heating process. The heat treatment monitoring system further comprises a learning unit 1840 adapted to determine a mapping of current sensor data to current feature data, and to determine reference feature data of a reference heating process based on feature data of at least one training heating process. The monitoring apparatus 150 further comprises a classification unit 1850 adapted to classify the type of food to be heated and to choose a reference heating process corresponding to the determined type of food. It should be emphasized that the respective units 1820, 1830, 1840, and 1850 may be provided separately or may also be implemented as software being executed by a CPU of the monitoring apparatus 150.

The sensor unit 1810 comprises at least one sensor 1812, wherein a sensor 1812 may be any sensor as described in the description above, in particular a camera 160 as described with respect to Figs. 1A and 1B, any sensor of the sensor system 850 described with respect to Fig. 10 or the sensor system described with regard to Fig. 12. In particular, the at least one sensor 1812 of the sensor unit 1810 comprises at least one of hygrometer, insertion temperature sensor, treatment chamber temperature sensor, acoustic sensors, scales, timer, camera, image sensor, array of photodiodes, a gas analyser of the gas inside the treatment chamber, means for determining temperature profiles of insertion temperature sensors, means for determining electromagnetic or acoustic process emissions of the food to be treated like light or sound being reflected or emitted in response to light or sound emitters or sources, means for determining results from 3D measurements of the food to be heated including 3D or stereo camera systems or radar, or means for determining the type or constitution or pattern or optical characteristics or volume or the mass of the food to be treated. According to this embodiment it is beneficial to use as much sensor data as input as feasible. Which sensor signal provides the best information is hard to predict. As the algorithms detect the variance of a reference bake, the learning unit 1840 used to im-plement machine learning may choose different sensor data for individually different baking products. Sometimes, volume and color variance may be the most significant data, sometimes it may be humidity, temperature and weight.

In an embodiment, the sensor unit 1810 comprises the camera 160 as the only sensor 1812, which leads to the advantage that no further sensor has to be integrated in the monitoring apparatus 150. Thus, the monitoring apparatus 150 may be formed as a single and compact casing being mounted to an oven door of the oven 110. It is, however, also possible to provide a sensor data input interface 1814 at the monitoring apparatus 150, by which current sensor data of the above mentioned sensors can be read by the sensor unit 1810 and transferred to the processing unit 1820. The current sensor data of the sensors 1812 are not necessarily raw data but can be pre-processed, like HDR pre-processed pixel data of the camera 160 or pre-processed sensor data of the laser triangulation sensors, which may contain, e.g. a calculated value of volume of the observed food piece.

The processing unit 1820, the monitoring unit 1830, the learning unit 1840 and the classification unit 1850 cooperate to provide a user with an optimized food heating result based on machine learning techniques as described above.

Herein, the processing unit 1820 and the learning unit 1840 are provided to reduce the amount of current sensor data of the above at least one sensor 1812. In particular, the learning unit 1840 is adapted to determine a mapping of current sensor data to current feature data by means of a variance analysis of at least one training heating process, to reduce the dimensionality of the current sensor data. The learning unit 1840 may be integrated in the monitoring apparatus 150 or may be an external unit located at another place, wherein a data connection may be provided, e.g. via Internet (as described below with regard to the usage of PCAloops). The at least one training heating process may thus be based on current sensor data of the sensor unit 1810 of the local monitoring apparatus 150, but also be based on current sensor data of sensor units of further monitoring apparatuses at different places (on the world), provided the case the type of sensor data is comparable with each other. By means of training heating processes, the sensor data are reduced in dimensionality, wherein sensor data with the highest variance over time is weighted most.

The variance analysis performed by the learning unit 1840 comprises at least one of principal component analysis (PCA), isometric feature mapping (ISOMAP) or linear Discriminant analysis (LDA), or a dimensionality reduction technique, which have been described in all detail above.

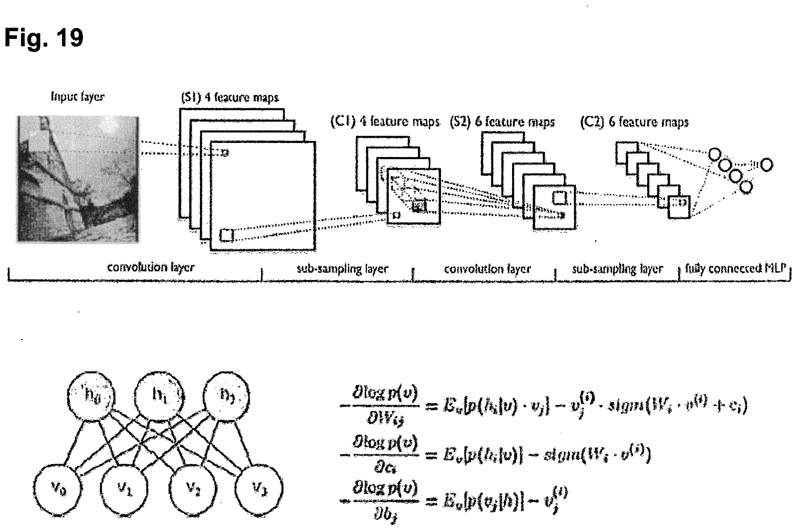

An interpretation and selection of dominant features may thus be performed by applying PCA or principle component analysis to a sequence of food processing data. As described above in this way the features may be sorted by variance and the most prominent may be very beneficial for monitoring. By performing the analysis as described above, a mapping can be derived for mapping sensor data to feature data being reduced in dimensionality and being characteristic for the heating process being performed and being monitored by the monitoring apparatus 150. The mapping, which may be also received from an external server, or may be stored in a memory in the monitoring apparatus 150, is then applied by the processing unit 1820 to map the incoming current sensor data from the sensor unit 1810 to current feature data, which are then transmitted to the monitoring unit 1830. It is emphasized that in some cases, the "mapping" might be for some sensor data an identify mapping, thus some of the sensor data might be equal to the respective feature data, in particular with regard to pre-processed sensor data already containing characteristic values like the absolute temperature within the heating chamber, a volume value of the food to be heated, a humidity value of the humidity within the heating chamber. However,the mapping is preferably a mapping, in which the dimensionality of the data is reduced. The learning unit may be further adapted to determine a mapping of current feature data to feature data by means of a variance analysis of at least one training heating process to reduce the dimensionality of the current feature data. A further example for feature mapping is illustrated in Fig. 19.

The monitoring unit 1830 is then adapted to determine a current heating process state in a current heating process of monitored food by comparing the current feature data with reference feature data of a reference heating process.

During monitoring, one of the desired interests is to interpret the current feature data and arrive with a decision about regular and irregular processing. With the named method it is possible to collect features of regular behaviour and then assume irregular behaviour, once feature values differ from the previously learned regular behaviour. This may be supported by including classifiers such as Support Vector Machines or k-nearest neighbours as described above. The monitoring unit 1830 may be adapted to determine at least one action of at least one actuator based on the determined current feature data or current heating process state, wherein the control unit 1300 as described above may be implemented in the monitoring unit 1830. Thus, the monitoring unit 1830 may be adapted to execute all machine learning techniques as described above.

According to an embodiment, the reference feature data of a reference heating process is compared with current feature data to determine a current heating process state. The reference feature data may be predetermined data received from an external server or stored in a memory of the monitoring apparatus 150. In another embodiment, the learning unit 1840 (external or internal of the monitoring apparatus 150) may be adapted to determine reference feature data of a reference heating process by combining predetermined feature data of a heating program with a training set of feature data of at least one training heating process being classified as being part of the training set by an user. The heating program can be understood as a time dependent sequence of feature data being characteristic for a certain kind or type of food to be heated.

For example, a reference heating process or a predetermined heating program may be a sequence of feature data in time of a certain kind of food to be heated like a Croissant, which leads to an optimized heating or baking result. In other words, if the current feature data exactly follows the time dependent path of the reference feature data points in the feature space having the dimensionality of the number of choosen relevant features, the food will be heated in an optimized way after a predetermined optimized time, i.e. the Croissant will be baken perfectly. The optimized time may be dependent on the temperature within the heating or baking chamber.

Combining predetermined feature data of a heating program with a training set of feature data of at least one training heating process being classified as being part of the training set by an user means that a point cloud of feature data in the feature space of the training set (i.e. of at least one training heating process being considered as being "good" by a user) is averaged for each time point (a center point of the point cloud is determined within the feature space) and then used to adapt the predetermined heating program. This can be done by further averaging the features of the heating program and the features of the training set equally or in a weighted way for each time point. For example, the weighting of the training set may be 25%, the weighting for the predetermined heating program may be 75%.

Thus, at least one reference bake (training heating process) may be taken to optimize subsequent bakes. Further feedback from subsequent bakes may optimize the individual baking programs accordingly. Accordingly, it is possible to achieve more consistent baking quality, if the current bake is being adapted by the current sensor data and its calculated alterations taken from the difference of the current bake and the so called "ground truth" (reference heating process), which is the baking program (predetermined heating program) combined with the feature data of at least one reference bake (training set) as well as the feature data from later feedback (training set) to the baking program and its according sensor data.

Thus, it is possible to calculate significant features with corresponding feature values from the sensor data of a reference bake combined with the time elapsed of the baking program. Here, it is feasible to use many different feature calculation variations and then sort them by variance. A possible mechanism to sort by variance is Principle Component Analysis (PCA) described above. When several features and feature values over time are calculated from a reference bake it is feasible to sort these sets of features and feature values over time with the PCA.

It is possible to automatically design a control algorithm for the repeating bakes by taking at least one of the most significant features and feature value data sets, preferably the one with most significant variance. If several reference bakes are present it is preferable to take the one with highest variance and highest feature value repetition.

To implement the above possibility to adapt the predetermined heating program to form a "ground truth", i.e. the reference heating process, the monitoring apparatus 150 may further comprise a recording unit 1822 to record current feature data of a current heating process, wherein the learning unit 1840 is adapted to receive the recorded feature data from the recording unit 1822 to be used as feature data of a training heating process. The sensor data may be exchanged by an internet connection. If the connection is temporarily not available it is of advantage to store the data locally in the recording unit 1822 or in a comparable memory and sync the data once the connection is up again.

The classification unit 1850 may be provided to classify the type of food to be heated. This may be done by image processing of an pixel image of the food to be heated, e.g. by face recognition techniques. After determining the type of food to be heated (bread roll, muffin, croissant or bread), the classification can be used to select a respective predetermined heating program or stored reference heating process corresponding to the respective type of food to be heated. In addition, sub-categories can be provided, for example small croissant, medium croissant, or big size croissant. Different reference heating processes may also stored with regard to non food type categories. For example, there may be a reference heating program corresponding to different time dependent environments or oven parameters.

For example, weather data may be implemented in the baking procedure of the present invention. By means of the known geographic altitude of the geometric position of the baking oven, the boiling point may be determined, thus leading to an adaption of the baking program. Moreover, local pressure, temperature, and humidity data of the environment of an oven may be used to further adapt the baking program. Thus, these data might be recorded and used as index data for certain reference heating programs, which then can be looked up in the memory.

A simplified version of the monitoring system 100 may detect, if the oven is empty or if it is equipped with x number of loaded trays. By detecting the number of trays an appropriate baking program may be selected. Thus, if the monitoring system 100 detects three trays loaded with food, an appropriate baking or proofing or processing program may be selected.

Further, statistics of loads, units and corrections may also be used as data for the inventive self-learning baking procedure. Thus a baking data history may help to improve the baking procedure of the present invention. By means of the distributed feedback being accounted for by role definition, the baking process of the present invention may be improved. The heat treatment monitoring systems in use may be further displayed on a zoomable world map.

Moreover, the baking data history may also take into account the amount of baking products produced over time. The heat treatment monitoring system may search the baking data history for periodically occurring minima and maxima of the production and estimate the occurrence of the next minimum or maximum. The heat treatment monitoring system may then inform a user of the system whether too many or too little food is produced for the time period of the expected minimum or maximum.

In a cloud service, that may be basically a website, the user may access data recorded at the different user stations. Next to a video that the user can download, 5 pictures of the bake may be provided. One picture at the beginning, one after one third, one after two thirds, one at recipe ending and one just before door opening. This way the user may detect if the oven operator has opened the door in time. If the door has been opened may be detected by our camera system as the camera system has learned how an empty oven looks like. So for instance at deck ovens, the door is just a handle and if the door is open or not may not be captured by the monitoring system 100. The monitoring system 100 may detect if food has been taken out by comparing the acutal picture with an empty oven picture, thus it may provide this information that cannot be figured with a door open/closed sensor.

The current heating process state is determined by comparing the current feature data with reference feature data. The comparing may be the determination of the distances of the current feature data and the reference feature data for each time point of the reference heating program. Thus, by determining the nearest distance of the determined distances, the time point of the nearest distance can be looked up in the reference heating program and thus, for example, a remaining baking time can be determined.

Different oven manufactures use different recipe formats and a recipe is different for any type of oven, for instance deck and convection oven. By using a unified recipe, including pictures of perfectly baked products, we can map this recipe to recipes used in oven systems of different types or manufacturers. Today a lot of restaurant chains use only one oven type and or manufacturer, because they try to keep all process variables the same. Our mapping of recipes helps restaurant chains to use different equipment in terms of oven type and manufacturer and still achieve similar or the same baking results.

As described above, the sensor unit 1810 may comprise a camera like the camera 160 recording a pixel image of food being heated, wherein the current sensor data of the camera corresponds to the current pixel data of a current pixel image.

Feature detection for image processing may comprise the following steps: detection of edges, corners, blobs, regions of interest, interest points, processing of color or grey-level images, shapes, ridges, blobs or regions of interest or interest points. Feature from sensor data may also comprise target amplitude selection or frequency-based feature selection.

Herein, edges are points where there is a boundary (or an edge) between two image regions. In general, an edge can be of almost arbitrary shape, and may include junctions. In practice, edges are usually defined as sets of points in the image which have a strong gradient magnitude. Furthermore, some common algorithms will then chain high gradient points together to form a more complete description of an edge. These algorithms usually place some constraints on the properties of an edge, such as shape, smoothness, and gradient value. Locally, edges have a one dimensional structure.

The terms corners and interest points are used somewhat interchangeably and refer to point-like features in an image, which have a local two dimensional structure. The name "Corner" arose since early algorithms first performed edge detection, and then analysed the edges to find rapid changes in direction (corners). These algorithms were then developed so that explicit edge detection was no longer required, for instance by looking for high levels of curvature in the image gradient. It was then noticed that the so-called corners were also being detected on parts of the image which were not corners in the traditional sense (for instance a small bright spot on a dark background may be detected). These points are frequently known as interest points, but the term "corner" is used by tradition.

Blobs provide a complementary description of image structures in terms of regions, as opposed to corners that are more point-like. Nevertheless, blob descriptors often contain a preferred point (a local maximum of an operator response or a center of gravity) which means that many blob detectors may also be regarded as interest point operators. Blob detectors can detect areas in an image which are too smooth to be detected by a corner detector. Consider shrinking an image and then performing corner detection. The detector will respond to points which are sharp in the shrunk image, but may be smooth in the original image. It is at this point that the difference between a corner detector and a blob detector becomes somewhat vague. To a large extent, this distinction can be remedied by including an appropriate notion of scale. Nevertheless, due to their response properties to different types of image structures at different scales, the LoG and DoH blob detectors are also mentioned in the article on corner detection.

For elongated objects, the notion of ridges is a natural tool. A ridge descriptor computed from a grey-level image can be seen as a generalization of a medial axis. From a practical viewpoint, a ridge can be thought of as a one-dimensional curve that represents an axis of symmetry, and in addition has an attribute of local ridge width associated with each ridge point. Unfortunately, however, it is algorithmically harder to extract ridge features from general classes of grey-level images than edge-, corner- or blob features. Nevertheless, ridge descriptors are frequently used for road extraction in aerial images and for extracting blood vessels in medical images.

The current pixel data may comprise first pixel data corresponding to a first color, second pixel data corresponding to a second color, and third pixel data corresponding to a third color, wherein the first, second and third color corresponds to R,G and B, respectively. Herein, an illumination source for illuminating the food with white light is advantageous. It is, however, also possible to provide a monochromatic illumination source in a preferred wavelength area in the optical region, for example at 600 nm, to observe a grey pixel image in the respective wavelength.

Due to the provision of separate analysis of R, G and B pixel values, it is possible to implement an algorithm which may learn bread colors. Here, it is essential to segment the bread pixels from the oven pixels, which may be done by color. It is of advantage to use high dynamic range (HDR) pre-processed pictures to have more intensity information to have the best segmentation. Thus, the camera is preferably adapted to generate HDR processed pixel images as current pixel data. Herein, also logarithmic scaling may be implemented, wherein the camera is adapted to record a linear logarithmic or combined linear and logarithmic pixel images. To learn the bread pixels an Artificial Neural Network with back propagation or an SVM class as described above may be used, which are trained with pictures, where the oven is masked manually.

In order to maintain equal color information, all camera units are being calibrated towards known colors. At this calibration step, white balance, HDR exposure times, color temperatures are set to a common level. After this reference colors are taken at the empty oven, to be able to perform this step remotely at a later point in time.

As an example, it may be that for baking rolls the most significant variance during the bake is a change in color (intensity change of pixels) and a change in volume (change in number of pixels with certain intensity). This may be the two most significant features during the reference bake or reference heating process and the corresponding feature values change over time. This creates a characteristic of the baking process. For instance the feature value representing the volume change may have a maximum after 10 minutes of 20 minutes and the color change after 15 minutes of 20 minutes of a bake. It is then possible to detect in repeating bakes by means of a classifier such as the aforementioned Support Vector Machine in the incoming sensor data of the repeating bake that the highest probabilities match in the reference bake or reference heating program. It may be that for instance the color change in the repeated bake has a maximum after 5 minutes for the volume change. The time difference of the repeating bake and the reference bake thus would be 50%. This would result in an adaptation of the remaining bake time by at least 50%. Here, an elapsing time of 5 minutes instead of 15.

Further, it may be possible to integrate an impact factor that may influence the impact of the control algorithm to the repeating baking program. This may be either automatically, such that the number of reference bakes influences the confidence factor, or such that it is manually set to a certain factor. This may as well be optimized by means of a remote system using information technology described earlier.

Moreover, it may be especially possible to change the temperature within this system by a change of a feature representing the color change. As it is described it is possible to calculate features representing the color change (change of intensity of pixels). It is feasible to normalize the pixel intensity. After normalization it is possible to adjust the temperature according to the change of color. If for example after 75% of remaining time there has not been the expected change in color the temperature may be risen, or if there has been more color change than expected from the reference bake the temperature may be lowered.

The monitoring apparatus 150 may further comprise a control unit 1860 adapted to change a heating process from a cooking process to a baking process based on a comparison of the current heating process state determined by the monitoring unit with a predetermined heating process state. The current heating process state is calculated as above by determining the time point of "nearest distance". By comparing the time points of the predetermined heating process state and the calculated time point, the heating process is changed, if the calculated time point is later then the time point of the predetermined heating process state. For example, as a rule of dumb, a proofing shall be finished after a volume change of 100% of the food to be heated, thus, if the bread roll or the Croissant has twice a volume, the proofing shall stop and the baking procedure shall start. The volume change of the bread or food to be baked may be detected by the camera pixel features in a very efficient way. The heat treatment machine to be controlled may be an integrated proofing/baking machine, however, also different machines for proofing or baking may also be controlled.

To simplify the calculations and to ensure repeatable results, it is preferred if the heating temperature is kept constant in a current heating process.

The control unit 1860 is further adapted to stop the heating process based on a comparison of the current heating process state determined by the monitoring unit with a predetermined heating process state corresponding to an end point of heating. The control unit 1860 may be adapted to alert a user, when the heating process has to be ended. Therefore, the monitoring apparatus may comprise an alert unit 1870 and a display unit 1880. The display unit 1880 is provided to indicate the current heating process state, for example the remaining heating or baking time. The display unit 1880 may further show a current pixel image of the inside of the heat treatment chamber for visual monitoring of the food to be heated by a user. The control unit 1860 may be adapted to control the display unit 1880 being adapted to indicate a remaining time of the heating process based on a comparison of the current heating process state determined by the monitoring unit with a predetermined heating process state corresponding to an end point of heating and/or to display images of the inside of the heat treatment chamber.

The control unit 1860 is further connected to an output interface 1890 for controlling actuators as described above or below like a temperature control of a heating chamber, means to adapt humidity in the heat treatment chamber by adding water, or a control of the ventilating mechanism (ventilating shutter). The actuators may further include means for adapting the fan speed, means for adapting the differential pressure between the heat treatment chamber and the respective environment, means for setting a time dependent temperature curve within the heat treatment chamber, means for performing and adapting different heat treatment procedures like proofing or baking, means for adapting internal gas flow profiles within the heat treatment chamber, means for adapting electromagnetic and sound emission intensity of respective electromagnetic or sound emitters for probing or observing properties of the food to be heated.

In particular, the control unit 1860 is adapted to control a temperature control of a heating chamber, means to adapt humidity in the heat treatment chamber by adding water or steam, a control of the ventilating mechanism, means for adapting the fan speed, means for adapting the differential pressure between the heat treatment chamber and the respective environment, means for setting a time dependent temperature curve within the heat treatment chamber, means for performing and adapting different heat treatment procedures like proofing or baking, means for adapting internal gas flow profiles within the heat treatment chamber, means for adapting electromagnetic and sound emission intensity of respective electromagnetic or sound emitters for probing or observing properties of the food to be heated.

A food heat treatment monitoring method of the present invention comprises determining current sensor data of food being heated; determining current feature data from the current sensor data; and determining a current heating process state in a current heating process of monitored food by comparing the current feature data with reference feature data of a reference heating process. The method preferably further comprises determining a mapping of current sensor data to current feature data and/or to determine reference feature data of a reference heating process based on feature data of at least one training heating process. In addition, the method comprises determining a mapping of current sensor data to current feature data by means of a variance analysis of at least one training heating process to reduce the dimensionality of the current sensor data. The method further comprises determining a mapping of current feature data to feature data by means of a variance analysis of at least one training heating process to reduce the dimensionality of the current feature data. The variance analysis preferably comprises at least one of principal component analysis (PCA), isometric feature mapping (ISOMAP) or linear Discriminant analysis (LDA), or a dimensionality reduction technique. The method further comprises preferably determining reference feature data of a reference heating process by combining predetermined feature data of a heating program with a training set of feature data of at least one training heating process being classified as being part of the training set by an user. In addition, by the method of the present invention, current feature data of a current heating process may be recorded, wherein the recorded feature data is used as feature data of a training heating process. Furthermore, the method may comprise classifying the type of food to be heated and to choose a reference heating process corresponding to the determined type of food. Preferably, a heating process is changed from a proofing process to a baking process based on a comparison of the current heating process state with a predetermined heating process state. The heating temperature is preferably kept constant in a current heating process. Preferably, the heating process is stopped based on a comparison of the current heating process state determined by the monitoring unit with a predetermined heating process state corresponding to an end point of heating. In an advantageous embodiment, a user is alerted, when the heating process has to be ended.

According to another embodiment of the monitoring apparatus 150, machine learning may be used for a multi input and multi output (MIMO) system. In particular, an adjusting system for added water, remaining baking time and/or temperature may be implemented by a heat treatment monitoring system using machine learning techniques.

The system is collecting all sensor data during the reference bake. In case of humidity, at least one hygrometer detects a reference value for the humidity over bake time during the reference bake. When repeating a baking of the same product the amount of water to be added may be different. The amount of baked products may be different, the oven inside volume may be different, or there may be more or less ice or water on the baked products when loading the oven.

Next to other adaptations, the control system according to the invention adds as much water as needed to achieve similar conditions compared to the reference baking. As the remaining bake time may be adapted by the control system, the time at which the water will be added changes as well. Instead of using a fixed time, such as to add 1 liter of water after 10 minutes of a 20 minutes baking program, according to this embodiment the system will add as much water as needed to hit the reference bake humidity level after 50% of elapsed time.

Once irregular behaviour is recognized in an implementation of this invention, this signal or irregularity and it's corresponding amplitude may be used to adjust processing devices such as mixers (energy induced into dough), dough dividers (cutting frequency), or industrials ovens (baking program times or temperature) within a food production process.

According to another embodiment the observation of the food within the baking chamber may be done "live", thus a live view of the oven inside enables a remote access of the baking process. Also remote oven adjustment may be possible to improve the baking behavior of a self-learning heat treatment monitoring system.

According to another embodiment, the door open time may be included as another type of feature data. The longer the door to the heat treatment chamber is open, the more the internal temperature of the heat treatment chamber drops. Thus, the door open time has a significant influence to the baking or proofing procedure due to its influence on the inside temperature of the heat treatment chamber.

In another embodiment of the invention, the heat treatment chamber may be automatically set to a pre-heat temperature. To achieve this, in a first step, food that is being placed in a rack system that may be attached to the heat treatment device such as an oven or a proofer or be independently on a transport rack or a wall mount or independent mounting must be captured by a sensor such as a camera or a light barrier or a sensor barrier. The resulting data may be compared with reference data and a classifying technique such as a k nearest neighbor algorithm. From previously learned data labeling or classification classes, predefined actions such as starting a baking program or a proofing program or a heat treatment machine may be executed. This can be used for automatic preheating in an oven or a proofer or a cooking device. This sensor mounting may be placed near but independently from a transport rack, this way one transport rack after another may be passing the sensor system. It is further of advantage to include a scale or weight sensor into the rack system that may be combined with a camera or light barrier. By taking the tray weights before and after baking, another reference is gathered to evaluate the baking result. The relative weight loss may then be used as a feedback for the machine learning algorithms or as reference data. If no proofer is available a common trick is to place saran wrap placed on top of the food tray. If colored saran wrap is used this may be of advantage in image processing.

In another embodiment of the invention, the graphical user interface (GUI) may be displayed on a device that is independent movable from the heat treatment machine such as a smart phone or a tablet. On the same device or a remote device such as a PC connected by an internet connection, the inside of the heat treatment chamber may be displayed. Thus, the user may have a view into the heat treatment chamber from a remote location.

In an embodiment "perception", "cognition", and "action" (P-C-A) loops, cognitive agents, and machine learning techniques suitable for industrial processes with actuators and intelligent sensors may be used. Transferring cognitive capabilities, knowledge, and skills, as well as creating many interacting P-C-A loops will be advantageous in a cognitive factory.

Only very few food production processes are unique. The majority of food production processes run at different facilities or at different times performing identical tasks in similar environments. Still, often no or limited information exchange exists between these processes. The same food processing stations often require an individual configuration of every entity managing similar process tasks. In order to increase the capability of machines to help each other it is advantageous to combine *in space or time distributed P-C-A loops.* Certain topics arise to approach this aim: In order to enable skill transfer between different entities it is advantageous to establish a reliable and adaptable Multi-P-C-A-loop topology. This metasystem should be able to identify similar processes, translate sensor data, acquire features, and analyze results of the different entities. Dimensionality reduction, clustering, and classification techniques may enable the machines to communicate on higher levels. Machine-machine trust models, collective learning, and knowledge representation are essential for this purpose. Furthermore some industrial processes may be redefined to optimize the overall performance in cognitive terms. Both data processing and hardware configuration should result in a secure, reliable, and powerful procedure to share information and transfer skills.

Using self-optimizing algorithms for control or parameterization of industrial applications offers the possibility to continuously improve the individual knowledge base. Reinforcement learning, for instance, gives a set of methods that provide this possibility. These algorithms rely on exploration in the processes state-space in order to learn the optimal state-action combinations. A reinforcement learning agent can also be described by a simple P-C-A-Loop, where the process of evaluating the state information of the environment is the "perception" element of the loop, the alteration of current control laws represents the "action" part and the process of mapping estimated state information to new control laws gives the "cognition" section of the single P-C-A loop. In industrial applications exploring a large state-space is not always feasible for various reasons like safety, speed, or costs. Using the Multi-P-C-A-Loop approach for distributing the learning task over multiple agents, can reduce the amount of exploration for the individual agents, while the amount of learning experience still remains high. It furthermore enables *teaching* among *different P-C-A loops.* A possible assignment for the Multi-P-C-A approach is the combination of multiple agents in one system or assembly line, for instance a monitoring and a closed-loop control unit. Two different agents could be trained for optimization of different process parameters. The combination of both on a Multi-P-C-A level could be used to find an optimal path for all parameters.

Both outlined Multi-P-C-A-Loops may improve manufacturing performance in setup and configuration times, process flexibility as well as quality. One approach combines and jointly improves similar workstations with joint knowledge and skill transfer. The other enables different units to self-improve with each others feedback. In the following, a networking system for cognitive processing devices according to the present invention should be described. It is an advantage of the present invention, that, once the collaborative systems gain enough machine knowledge, they avoid repetitive configuration steps and may significantly reduce down times as well as increase product flexibility.

According to one embodiment of the present invention, in order to facilitate the integration of several heat treatment monitoring systems 100, all distributed systems are connected to each other via internet. The knowledge gained by these systems is shared, thus allowing a global database of process configurations, sensor setups and quality benchmarks.

In order to share information between machines, all of them have to use a similar method of feature acquisition. As a first scenario to achieve these goals using cognitive data processing approaches for combining the input data from multiple sensors of the respective sensor units 1810 of the monitoring systems 100 in order to receive a good estimation of the state the process is currently in.

Using cognitive dimensionality reduction techniques, unnecessary and redundant data from these sensors can be removed. The reduced sensor data is used to classify the state of the process. Clustering allows for identification of specific process states, even between different set-ups. If a significant difference from the references, and therefore an unknown process condition, is detected, the supervisor will be alerted. The expert can then teach the new state and countermeasures (if possible) to the system in order to improve its performance.

The cognitive system to be developed should be able to learn to separate acceptable and unacceptable results and furthermore be able to avoid unacceptable results where possible. The usage of technical cognition eliminates the need for a complete physical model of the baking or food production process. The system is able to stabilize the process by improving at least one steering variable. Distributed cognition allows for a central database between different manufacturing locations. The information gathered from one process can be transferred to a similar process at a different location.

Support for the claims and further information is defined in the following itemized list:

1. A heat treatment monitoring system (600), comprising

   a heat treatment machine (612) comprising a heat treatment chamber (618) and at least one lighting source mounting (622) for mounting a light source (620) for illuminating the inside of the heat treatment chamber (618); and
   a monitoring apparatus (614) comprising a camera (626) or an array of photodiodes, a camera light source (628) and a mounting part (640),
   wherein the mounting part (640) is adapted to be removably fixed to the lighting source mounting (622).

2. The heat treatment monitoring system according to item 1, wherein the lighting source mounting (622) is a halogen lamp holder, which supplies power and provides mounting.

3. The heat treatment monitoring system according to items 1 or 2, wherein the mounting part (640) is removably fixed to the lighting source mounting (622) by a screw coupling.

4. The heat treatment monitoring system of any one of the preceding items, wherein the camera light source (628) comprises at least one light emitting diode (634) arranged next to the camera (626).

5. The heat treatment monitoring system of any one of the preceding items, wherein the camera light source (628) comprises at least two light emitting diodes (634) encircling the camera (626).

6. The heat treatment monitoring system of claims of any one of the preceding items, wherein the camera (626) comprises an optical system including a wideangle lens (638).

7. The heat treatment monitoring system of claims of any one of the preceding items, wherein the camera (626) comprises an optical system including an integrated wavelength bandpass filter that matches the wavelength emitted by the camera light source (628).

8. The heat treatment monitoring system of of any one of the preceding items, wherein the monitoring apparatus (614) further comprises a cooling device (636) comprising at least one of a fan (638), a peltier element, a water cooling device, a heat sink or a cooling plate

9. The heat treatment monitoring system of any one of the preceding items, wherein the monitoring apparatus (614) comprises a sensor unit (1810) having the camera (626) to determine current sensor data of food being heated.

10. The heat treatment monitoring system of item 9, further comprising

a processing unit (1820) to determine current feature data from the current sensor data; and
a monitoring unit (1830) adapted to determine a current heating process state in a current heating process of the monitored food by comparing the current feature data with reference feature data of a reference heating process.

11. The heat treatment monitoring system of item 10, further comprising

- a learning unit (1840) adapted to determine a mapping of current sensor data to current feature data and/or to determine reference feature data of a reference heating process based on feature data of at least one training heating process.

12. The heat treatment monitoring system (100) of item 11, wherein the learning unit (1840) is adapted to determine a mapping of current sensor data to current feature data by means of a variance analysis of at least one training heating process to reduce the dimensionality of the current sensor data.

13. The heat treatment monitoring system (100) of any one of the items 9 to 12, wherein the camera (622) is adapted to record a pixel image of food being heated, wherein the current sensor data of the camera (626) corresponds to the current pixel data of a current pixel image.

14. The heat treatment monitoring system (100) of item 13, wherein the current pixel data comprises first pixel data corresponding to a first color, second pixel data corresponding to a second color, and third pixel data corresponding to a third color, wherein the first, second and third color corresponds to R,G and B, respectively.

15. A method for integrating a monitoring apparatus (614) in a heat treatment machine (612) of any one of the preceding claims, comprising the steps of:

removing the light source (620) for illuminating the inside of the heat treatment chamber (618) of the heat treatment machine (610) from the lighting source mounting (622),
coupling the monitoring apparatus (614) with the lighting source mounting (622), and
connecting a power adaptor (615) of the monitoring apparatus (614) with a power source adaptor of the lighting source mounting (622), which is adapted to provide the light source (620) with electric power.

**Claims**

1. A food heat treatment monitoring method, comprising

- recording a pixel image by a camera, wherein current pixel data of a current pixel image of the camera corresponds to current sensor data;
- calibrating the current sensor data by setting white balance and color temperatures to a common level on the basis of reference colors observed by the camera in a calibration process;
- determining current sensor data of food to be heated;
- determining current feature data from the current sensor data;
- determining a current heating process state in a current heating process of monitored food by comparing the current feature data with reference feature data of a reference heating process, wherein determining a current heating process state comprises
- determining distances in a feature space of the current feature data to the reference feature data for each time point of the reference heating program, and
- determining a current time point in the reference heating program by determining the time point of reference feature data of the reference heating program having the nearest distance to the current feature data, and wherein determining current feature data from the current sensor data comprises
- applying a linear or nonlinear mapping to map the current sensor data to current feature data being reduced in dimensionality, wherein the mapping is derived by means of a variance analysis of at least one training heating process, in which sensor data of the at least one training heating process with the highest variance over time in the at least one training heating process is weighted most.

**2.** The method of claim 1, further comprising

- indicating a remaining time of the heating process, and/or stopping the heating process and/or alerting a user, when the heating process has to be ended, based on a comparison of the current heating process state with a predetermined heating process state corresponding to an end point of heating.

**3.** The method of any one of the preceding claims, further comprising

- classifying the type of food to be heated and choosing a reference heating process corresponding to the determined type of food.

**4.** The method of any one of the preceding claims, wherein the current pixel data comprises first pixel data corresponding to a first color, second pixel data corresponding to a second color, and third pixel data corresponding to a third color.

**5.** The heat treatment monitoring system (100) of any one of the preceding claims, further comprising generating HDR processed pixel images as current pixel data.

**6.** The method of claim 5, further comprising calibrating the current sensor data by setting HDR exposure times to a common level on the basis of reference colors observed by the camera in a calibration process.

**7.** The method of any one of the preceding claims, wherein determining current feature data from the current sensor data comprises normalizing pixel intensity and implementing logarithmic scaling for color detection of food.

**8.** The method of any one of the preceding claims, further comprising segmenting image pixels of food from image pixels of the surroundings by means of color.

**9.** The method of any one of the preceding claims, further comprising illuminating the food with white light and/or focusing the illumination on the food to be cooked and/or using HDR processing such that there is a high contrast between the food to be heated and the surroundings.

**10.** The method of any one of the preceding claims, further comprising

- determining reference feature data of a reference heating process based on feature data of at least one training heating process, or
- determining reference feature data of a reference heating process by combining predetermined feature data of a heating program with a training set of feature data of at least one training heating process being classified as being part of the training set by an user.

**11.** A food heat treatment monitoring system adapted for carrying out the method of any one of the preceding claims.

**12.** A computer program comprising instructions which, when the program is executed by a computer, cause the computer to carry out the method of any one of the claims 1 to 10.

**Patentansprüche**

**1.** System zum Überwachen einer Wärmebehandlung von Lebensmitteln, aufweisend:

ein Aufzeichnen eines Pixelbildes mittels einer Kamera, wobei aktuelle Pixeldaten eines aktuellen Pixelbildes der Kamera aktuellen Sensordaten entsprechen;
ein Kalibrieren der aktuellen Sensordaten durch Einstellen eines Weißabgleichs und von Farbtemperaturen auf einen gemeinsamen Pegel auf der Basis von Referenzfarben, die mittels der Kamera in einem Kalibrierungsprozess beobachtet wurden;
ein Bestimmen aktueller Sensordaten eines zu erhitzenden Lebensmittels;
ein Bestimmen aktueller Merkmalsdaten aus den aktuellen Sensordaten;
ein Bestimmen eines aktuellen Zustands eines Prozesses zum Erhitzen in einem aktuellen Prozess zum Erhitzen eines überwachten Lebensmittels, indem die aktuellen Merkmalsdaten mit Referenz-Merkmalsdaten eines Referenz-Prozesses zum Erhitzen verglichen werden, wobei ein Bestimmen eines aktuellen Zustands eines Prozesses zum Erhitzen aufweist

ein Bestimmen von Abständen in einem Merkmalraum der aktuellen Merkmalsdaten zu den Referenz-Merkmalsdaten für jeden Zeitpunkt des Referenz-Programms zum Erhitzen und

ein Bestimmen eines aktuellen Zeitpunkts im Referenz-Programm zum Erhitzen, indem der Zeitpunkt von Referenz-Merkmalsdaten des Referenz-Programms zum Erhitzen mit dem nächsten Abstand zu den aktuellen Merkmalsdaten bestimmt wird, und

wobei ein Bestimmen aktueller Merkmalsdaten aus den aktuellen Sensordaten aufweist

ein Anwenden einer linearen oder nicht-linearen Abbildung, um die aktuellen Sensordaten auf aktuelle Merkmalsdaten abzubilden, deren Dimensionalität reduziert ist, wobei die Abbildung mittels einer Varianzanalyse zumindest eines Training-Prozesses zum Erhitzen abgeleitet wird, worin Sensordaten des zumindest einen Trainings-Prozesses zum Erhitzen mit der höchsten Varianz über die Zeit in dem zumindest einen Trainings-Prozess zum Erhitzen am stärksten gewichtet werden.

2. Verfahren nach Anspruch 1, ferner aufweisend

ein Anzeigen einer verbleibenden Zeit des Prozesses zum Erhitzen und/oder ein Stoppen des Prozesses zum Erhitzen und/oder ein Alarmieren eines Nutzers, wenn der Prozess zum Erhitzen zu beenden ist, basierend auf einem Vergleich des aktuellen Zustands eines Prozesses zum Erhitzen mit einem vorbestimmten Zustand eines Prozesses zum Erhitzen, der einem Endpunkt eines Erhitzens entspricht.

3. Verfahren nach einem der vorhergehenden Ansprüche, aufweisend

ein Klassifizieren der Art eines zu erhitzenden Lebensmittels und ein Wählen eines Referenz-Prozesses zum Erhitzen entsprechend der bestimmten Art von Lebensmittel.

4. Verfahren nach einem der vorhergehenden Ansprüche, wobei die aktuellen Pixeldaten einer ersten Farbe entsprechende erste Pixeldaten, einer zweiten Farbe entsprechende zweite Pixeldaten und einer dritten Farbe entsprechende dritte Pixeldaten aufweisen.

5. System (100) zum Überwachen einer Wärmebehandlung nach einem der vorhergehenden Ansprüche, ferner aufweisend ein Erzeugen HDRverarbeiteter Pixelbilder als aktuelle Pixeldaten.

6. Verfahren nach Anspruch 5, ferner aufweisend ein Kalibrieren der aktuellen Sensordaten durch Einstellen von HDR-Belichtungszeiten auf einen gemeinsamen Pegel auf der Basis von Referenzfarben, die mittels der Kamera in einem Kalibrierungsprozess beobachtet wurden.

7. Verfahren nach einem der vorhergehenden Ansprüche, wobei ein Bestimmen aktueller Merkmalsdaten aus den aktuellen Sensordaten ein Normieren einer Pixelintensität und ein Implementieren einer logarithmischen Skalierung für eine Farbdetektion eines Lebensmittels aufweist.

8. Verfahren nach einem der vorhergehenden Ansprüche, ferner aufweisend ein Segmentieren von Bildpixeln eines Lebensmittels von Bildpixeln der Umgebung mittels Farbe.

9. Verfahren nach einem der vorhergehenden Ansprüche, ferner aufweisend ein Beleuchten des Lebensmittels mit Weißlicht und/oder ein Fokussieren der Beleuchtung auf das zu kochende Lebensmittel und/oder ein Verwenden einer HDR-Verarbeitung, so dass es einen hohen Kontrast zwischen dem zu erhitzenden Lebensmittel und der Umgebung gibt.

10. Verfahren nach einem der vorhergehenden Ansprüche, ferner aufweisend

ein Bestimmen von Referenz-Merkmalsdaten eines Referenz-Prozesses zum Erhitzen basierend auf Merkmalsdaten von zumindest einem Trainings-Prozess zum Erhitzen oder

ein Bestimmen von Referenz-Merkmalsdaten eines Referenz-Prozesses zum Erhitzen durch Kombinieren vorbestimmter Merkmalsdaten eines Programms zum Erhitzen mit einem Trainingssatz von Merkmalsdaten von zumindest einem Trainings-Prozess zum Erhitzen, der von einem Nutzer als Teil des Trainingssatz klassifiziert ist.

11. System zum Überwachen einer Wärmebehandlung von Lebensmitteln, das dafür geeignet ist, das Verfahren nach einem der vorhergehenden Ansprüche auszuführen.

**12.** Computerprogramm, aufweisend Anweisungen, die, wenn das Programm von einem Computer ausgeführt wird, veranlassen, dass der Computer das Verfahren nach einem der Ansprüche 1 bis 10 ausführt.

**Revendications**

**1.** Procédé de surveillance de traitement thermique d'aliment, comprenant

- l'enregistrement d'une image de pixel par une caméra, dans lequel des données de pixel courantes d'une image de pixel courante de la caméra correspondent à des données de capteur courantes ;
- l'étalonnage des données de capteur courantes par réglage d'équilibrage de blanc et de températures de couleur à un niveau commun sur la base de couleurs de référence observées par la caméra dans un processus d'étalonnage ;
- la détermination de données de capteur courantes d'un aliment à chauffer ;
- la détermination de données de particularités courantes à partir des données de capteur courantes ;
- la détermination d'un état de processus de chauffage courant dans un processus de chauffage courant d'un aliment surveillé par comparaison des données de particularités courantes avec des données de particularités de référence d'un processus de chauffage de référence, dans lequel la détermination d'un état de processus de chauffage courant comprend
- la détermination de distances dans un espace de particularités entre les données de particularités courantes et les données de particularités de référence pour chaque instant du programme de chauffage de référence, et
- la détermination d'un instant courant dans le programme de chauffage de référence par détermination de l'instant de données de particularités de référence du programme de chauffage de référence ayant la distance la plus proche avec les données de particularités courantes, et

dans lequel la détermination de données de particularités courantes à partir des données de capteur courantes comprend
- l'application d'une mise en correspondance linéaire ou non linéaire pour mettre en correspondance les données de capteur courantes avec les données de particularités courantes dont la dimensionnalité est réduite, dans lequel la mise en correspondance est dérivée au moyen d'une analyse de variance d'au moins un processus de chauffage d'entraînement, dans lequel des données de capteur de l'au moins un processus de chauffage d'entraînement avec la variance la plus élevée dans le temps dans l'au moins un processus de chauffage d'entraînement sont les plus pondérées.

**2.** Procédé selon la revendication 1, comprenant en outre

- l'indication d'un temps restant du processus de chauffage, et/ou l'arrêt du processus de chauffage, et/ou l'alerte d'un utilisateur, lorsque le processus de chauffage doit se terminer, d'après une comparaison de l'état de processus de chauffage courant avec un état de processus de chauffage prédéterminé correspondant à un point final de chauffage.

**3.** Procédé selon l'une des revendications précédentes, comprenant en outre

- la classification du type d'aliment à chauffer et le choix d'un processus de chauffage de référence correspondant au type d'aliment déterminé.

**4.** Procédé selon l'une des revendications précédentes, dans lequel les données de pixel courantes comprennent des premières données de pixel correspondant à une première couleur, des deuxièmes données de pixel correspondant à une deuxième couleur, et des troisièmes données de pixel correspondant à une troisième couleur.

**5.** Système de surveillance de traitement thermique (100) selon l'une des revendications précédentes, comprenant en outre la génération d'images de pixel traitées par HDR en tant que données de pixel courantes.

**6.** Procédé selon la revendication 5, comprenant en outre l'étalonnage des données de capteur courantes par réglage de temps d'exposition HDR à un niveau commun sur la base de couleurs de référence observées par la caméra dans un processus d'étalonnage.

**7.** Procédé selon l'une des revendications précédentes, dans lequel la détermination de données de particularités courantes à partir des données de capteur courantes comprend la normalisation d'une intensité de pixel et la mise en œuvre d'une mise à l'échelle logarithmique pour une détection de couleur d'aliment.

8. Procédé selon l'une des revendications précédentes, comprenant en outre la segmentation de pixels d'image d'aliment à partir de pixels d'image de l'environnement au moyen d'une couleur.

9. Procédé selon l'une des revendications précédentes, comprenant en outre l'illumination de l'aliment avec de la lumière blanche et/ou la focalisation de l'illumination sur l'aliment à cuire et/ou l'utilisation d'un traitement HDR de façon à avoir un contraste élevé entre l'aliment à chauffer et l'environnement.

10. Procédé selon l'une des revendications précédentes, comprenant en outre

- la détermination de données de particularités de référence d'un processus de chauffage de référence d'après des données de particularités d'au moins un processus de chauffage d'entraînement, ou
- la détermination de données de particularités de référence d'un processus de chauffage de référence par combinaison de données de particularités prédéterminées d'un programme de chauffage avec un jeu d'entraînement de données de particularités d'au moins un processus de chauffage d'entraînement qui est classifié comme faisant partie du jeu d'entraînement par un utilisateur.

11. Système de surveillance de traitement thermique d'aliment adapté pour réaliser le procédé selon l'une des revendications précédentes.

12. Programme d'ordinateur comprenant des instructions qui, lorsque le programme est exécuté par un ordinateur, amènent l'ordinateur à réaliser le procédé selon l'une des revendications 1 à 10.

# Fig. 1A

# Fig. 1B

# Fig. 2A

# Fig. 2B

# Fig. 2C

Fig. 3

300

EP 3 598 005 B1

Fig. 4

42

Fig. 5

Fig. 6B

Fig. 6A

**Fig. 6C**

618

600

616

612

A

**Fig. 6D**

622a
620b
620a
620
622
622a
644
640b
614
640
642
624
638
636

A

## Fig. 6E

# Fig. 6F

## Fig. 6G

<u>614</u>

Fig. 6H

Fig. 6I

**Fig. 7A**

700

718    712

722b

722

722a

716

714

720a

720

**Fig. 7B**

**Fig. 7C**

**Fig. 7D**

714

724

A

A

748

740

**Fig. 7E**

714

748

736

726

742

740

746

744

738

724

**Fig. 8A**

818    820    814    B    844    812    800    810    816

832

**Fig. 8B**

844    B

830    832

**Fig. 8C**

**Fig. 8D**

A - A

## Fig. 9A

826  824  828  826  814

822

h

838

838

## Fig. 9B

828  848  844  814  848

h

830  822

**Fig. 9C**

**Fig. 9D**

**Fig. 9E**

Fig. 10

EP 3 598 005 B1

## Fig. 11

EP 3 598 005 B1

Fig. 12

**Fig. 13**

$$D_a X_c = D_b$$

1301

1300

$D_a$

$D_b$

1310

EP 3 598 005 B1

**Fig. 14**

Fig. 15

EP 3 598 005 B1

# Fig. 16

Fig. 17

# Fig. 18A

# Fig. 18B

Fig. 19

EP 3 598 005 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2662628 A1
- EP 2444735 A2
- DE 102013100298 A1
- US 7183521 B2